# EUROPÄISCHE PATENTSCHRIFT

(11) **EP 3 202 816 B1**
(45) Veröffentlichungstag und Bekanntmachung des Hinweises auf die Patenterteilung: **19.09.2018**
(21) Anmeldenummer: 16154170.1
(22) Anmeldetag: 04.02.2016
(51) Int. Cl.: C08G 65/22, C08G 18/50, C08G 18/75, C09D 171/02, C08G 65/333, C08G 18/28, C08G 65/336

(54) **ALKOXYSILYLHALTIGE KLEBDICHTSTOFFE MIT VERBESSERTEM WEITERREISSWIDERSTAND**
ADHESIVE MATERIALS CONTAINING ALKOXYSILYL WITH IMPROVED TEARING RESISTANCE
COLLE D'ETANCHEITE CONTENANT DES ALKOXYSILYLES ET AYANT UNE RESISTANCE AMELIOREE A L'ALLONGEMENT D'UNE DECHIRURE AMORCEE

(43) Veröffentlichungstag der Anmeldung: 09.08.2017
(73) Patentinhaber: Evonik Degussa GmbH, 45128 Essen (DE)
(72) Erfinder: LOBERT, Matthias, 45309 Essen (DE); LEWIN, Anke, 40215 Düsseldorf (DE); KNOTT, Wilfried, 45355 Essen (DE); SCHUBERT, Frank, 47506 Neukirchen-Vluyn (DE); FERENZ, Michael, 45147 Essen (DE)

(56) Entgegenhaltungen:
- EP-A1- 2 093 244
- EP-A1- 2 289 972
- EP-A1- 2 840 104
- WO-A1-2012/003216
- GERHARD SCHOTTNER: "Hybrid Sol-Gel-Derived Polymers: Applications of Multifunctional Materials", CHEMISTRY OF MATERIALS, AMERICAN CHEMICAL SOCIETY, US , Bd. 13, Nr. 10 15. Oktober 2001 (2001-10-15), Seiten 3422-3435, XP002717483, ISSN: 0897-4756, DOI: 10.1021/CM011060M Gefunden im Internet: URL:http://nathan.instras.com/documentDB/p aper-192.pdf [gefunden am 2001-10-15]
- PLINIO INNOCENZI ET AL: "Sol-gel reactions of 3-glycidoxypropyltrimethoxysilane in a highly basic aqueous solution", DALTON TRANSACTIONS: THE INTERNATIONAL JOURNAL FOR INORGANIC, ORGANOMETALLIC AND BIOINORGANIC CHEMISTRY, Nr. 42, 1. Januar 2009 (2009-01-01), Seite 9146, XP055272006, GB ISSN: 1477-9226, DOI: 10.1039/b905830c

## Beschreibung

Gegenstand der vorliegenden Erfindung sind spezielle alkoxysilyl-modifizierte Polymere, ein Verfahren zu deren Herstellung, Zusammensetzungen, die diese alkoxysilyl-modifizierten Polymere enthalten sowie deren Verwendung, insbesondere als alkoxysilylgruppenhaltige Kleb- und Dichtstoffe.

In einer Vielzahl von Arbeitsvorgängen und Fertigungsprozessen spielt die Verwendung von Klebstoffen und Klebdichtstoffen, welche zusätzlich eine abdichtende Funktion erfüllen, eine zunehmend wichtige Rolle. Diese Verfahren bieten gegenüber anderen Fügeverfahren, wie beispielsweise dem Schweißen oder Nieten, Vorteile hinsichtlich Gewicht und Kosten, aber auch Vorteile bei der Spannungsübertragung zwischen den Fügeteilen.

Gegenüber dem Fügen von unterschiedlichen Materialien hat Kleben zudem den Vorteil, dass es, insbesondere bei der Verwendung von elastischen Klebstoffen, das unterschiedliche Verformungsverhalten und Differenzen in thermischen Ausdehnungskoeffizienten der Materialien ausgleichen kann, und so das Fügen solcher Materialkombinationen erst ermöglicht.

Es finden sich in der Literatur verschiedene Beispiele für elastische Klebstoffe. Insbesondere haben in den letzten Jahren Klebstoffe auf Basis sogenannter silanmodifizierter Polymere aufgrund ihrer universellen Einsetzbarkeit eine breite Anwendung gefunden. Viele Beispiele in der Literatur befassen sich mit der Formulierung von Kleb-, Klebdichtstoff und Dichtstoffsystemen für eine Vielzahl von Anwendungen. Hier seien nur beispielhaft die Schriften WO 2006/136211 A1, EP 1036807 B1 und WO 2010/004038 A1 genannt, in denen die grundlegenden Konzepte der nach dem Stand der Technik üblichen Formulierungsbestandteile und Formulierungstechniken dargestellt sind. Üblicherweise handelt es sich bei dem verwendeten Basispolymer um einen Polyether, welcher in unterschiedlichen Verfahren mit feuchtigkeitsvernetzenden terminalen Alkoxysilangruppen versehen wurde. Zu dieser Produktgruppe gehören sowohl die von der Firma Kaneka unter dem Namen MS Polymer® vertriebenen silylierten Polyether, als auch die sogenannten silylierten Polyurethane (SPUR Produkte, beispielsweise Desmoseal® S, Bayer Materials Science).

Die Verwendung von Polyether-Backbones in diesen Produkten ist vor allem aufgrund ihrer geringen Glastemperatur und den somit auch bei niedrigen Temperaturen gewährleisteten elastischen Verformungscharakteristiken von Vorteil. Allerdings haben insbesondere die silylierten Polyether, wie in den Schriften JP 09012863, JP 09012861 und JP 07062222 beschrieben, aufgrund ihrer bei Einsatzbedingungen schwachen intermolekularen Wechselwirkung und der damit verbundenen reduzierten intermolekularen Übertragung von Kräften, nicht das optimale Profil für den Einsatz in Kleb- oder Dichtstoffen.

Silylierte Polyurethane, wie in DE 69831518 (WO 98/47939 A1) beschrieben, sind hier eindeutig im Vorteil, da die Urethanfunktionen und die je nach Produkt ebenfalls vorhandenen Harnstoff-Funktionen eine starke intermolekulare Kraftübertragung und somit hohe Festigkeiten der Verklebungen ermöglichen. Allerdings sind auch silylierte Polyurethane mit den Polyurethan-assoziierten Problemen, wie beispielsweise fehlender Temperatur- und Vergilbungsbeständigkeit, sowie der für einige Anwendungen nicht ausreichenden UV-Stabilität, behaftet.

Alkoxylierungsprodukte können gemäß Stand der Technik durch die Reaktion eines OH-Gruppe(n) tragenden Starters mit Propylenoxid und einer oder mehrerer Epoxidgruppen enthaltenden Alkoxysilylverbindung(en) und, je nach Ausführungsform einem oder mehreren Comonomeren durch Doppelmetallcyanidkatalysatoren (DMC-Katalysatoren), nach EP 2093244 (US 2010/0041910), EP 2636696 A1 (US 9035011 B2), EP 2840104 A (US 20150057369 A1), WO 2014170072 A2 und WO 2015082264 A1 und den in EP 2415796 (US 2012/028022), EP 2415797 (US 2012/029090) und EP 2840104 A (US 20150057369 A1) beschriebenen Nachbehandlungsverfahren hergestellt werden.

Aber die für immer vielfältigere Anwendungen eingesetzten alkoxysilyl-modifizierten Kleb- und Dichtstoffe müssen sich stets einer anspruchsvolleren Erwartungshaltung hinsichtlich ihrer anwendungstechnischen Eigenschaften stellen.

Aufgabe der vorliegenden Erfindung war es somit alkoxysilyl-modifizierte Polymere bereitzustellen, welche gut verarbeitbare Viskositäten aufweisen, und darüber hinaus noch signifikant bessere anwendungstechnische Eigenschaften zeigen gegenüber dem aktuellen Stand der Technik.

Zudem war es die Aufgabe der vorliegenden Erfindung ein einfaches Verfahren zur Herstellung solcher alkoxysilyl-modifizierter Polymere bereitzustellen, sowie die Bereitstellung von härtbaren Zusammensetzungen basierend auf derartigen alkoxysilyl-modifizierten Polymeren.

Diese Aufgaben wurden gelöst durch das Bereitstellen von alkoxysilyl-modifizierten Polymeren mit Polyetherrückgrat, die sowohl im zentralen, als auch im peripheren Bereich des alkoxysilyl-modifizierten Polymeren Alkoxysilylgruppen tragen.

Als zentraler Bereich des alkoxysilyl-modifizierten Polymers wird insbesondere derjenige Bereich des Polyetherrückgrats bezeichnet, der durch Anlagerung von Alkylenoxid(en) und Alkoxysilylgruppen tragenden Epoxid(en) an einen dihydroxy-funktionellen Starter (A) aufgebaut worden ist und durch Umsetzung mit einem Diisocyanat mit dem bzw. den peripheren Bereich(en) des Polyetherrückgrats, welcher durch Anlagerung von Alkylenoxid(en) und Alkoxysilylgruppen tragenden Epoxid(en) an einen monohydroxy-funktionellen Starter (B) aufgebaut worden ist, verbunden ist.

Gegenstand der Erfindung sind alkoxysilyl-modifizierte Polymere der in Formel (I) gezeigten Konstitution nach Maßgabe des Anspruches 1.

Derartige alkoxysilyl-modifizierte Polymere sind mittels eines Verfahrens zugänglich, umfassend die Schritte
(1) Umsetzen mindestens eines dihydroxy-funktionellen Starters, ausgewählt aus der Gruppe der Alkohole oder Polyetherole mit mindestens einem Alkylenoxid und mindestens einem Alkoxysilylgruppen tragenden Epoxid,
(2) Umsetzen mindestens eines monohydroxy-funktionellen Starters, ausgewählt aus der Gruppe der Alkohole oder Polyetherole mit mindestens einem Alkylenoxid und mindestens einem Alkoxysilylgruppen tragenden Epoxid, und
(3) Umsetzen der Produkte aus den Verfahrensschritten (1) und (2) mit mindestens einem Diisocyanat und gegebenenfalls weiteren Reaktanden.

Im Verfahrensschritt (1) wird der zentrale Bereich des Polyetherrückgrats (in Formel (I) - Fragment D) des erfindungsgemäßen finalen alkoxysilyl-modifizierten Polymers aufgebaut und im Verfahrensschritt (2) der bzw. die periphere(n) Bereiche (in Formel (I) - Fragmente M). Abschließend werden diese Polyetherfragmente M-H und D-H im Verfahrensschritt (3) durch Umsetzung mit Diisocyanaten miteinander verknüpft.

Überraschenderweise wurde gefunden, dass die erfindungsgemäßen alkoxysilyl-modifizierten Polymere, wo sowohl die in Formel (I) gezeigten Fragmente D als auch M alkoxysilyl-funktionell sind, signifikant vorteilhafte anwendungstechnische Eigenschaften gegenüber alkoxysilyl-modifizierten Polymeren haben, die nur in einem der Fragmente M oder D eine Alkoxysilylfunktionalität tragen.

Insbesondere überraschend war die sehr gute Dehnbarkeit der erfindungsgemäßen Produkte enthaltend Alkoxysilylmodifikationen auch im zentralen Fragment D, da doch der Stand der Technik lehrt, dass insbesondere terminal alkoxysilyl-modifizierte Polymere mit langen unfunktionellen zentralen Polyetherketten zu hohen Flexibilitäten führen.

Die Einführung von Alkoxysilylfunktionalitäten zusätzlich zu den peripheren Fragmenten auch in das zentrale Fragment sollte zu einer verbesserten Netzwerkbildung im Rahmen der Feuchtigkeitsvernetzung führen, was sich im Fall der erfindungsgemäßen Produkte auch durch ein verbessertes Rückstellvermögen zeigt. Dass dieser verbesserte Netzwerkaufbau zu einer höheren Bruchspannung führt, ist für den Fachmann plausibel, dass dies aber nicht zu Lasten einer stark reduzierten Bruchdehnung führt war so nicht zu erwarten.

Gegenstand der vorliegenden Offenbarung sind daher alkoxysilyl-modifizierte Polymere, insbesondere gemäß Formel (I), die sowohl im zentralen, als auch im peripheren Bereich des Polymerrückgrats Alkoxysilylgruppen tragen.

Gegenstand der vorliegenden Erfindung ist ein Verfahren zur Herstellung derartiger Polymere, umfassend die Schritte
(1) Umsetzen mindestens eines dihydroxy-funktionellen Starters (A), ausgewählt aus der Gruppe der Alkohole oder Polyetherole mit mindestens einem Alkylenoxid und mindestens einem Alkoxysilylgruppen tragenden Epoxid,
(2) Umsetzen mindestens eines monohydroxy-funktionellen Starters (B), ausgewählt aus der Gruppe der Alkohole oder Polyetherole mit mindestens einem Alkylenoxid und mindestens einem Alkoxysilylgruppen tragenden Epoxid, und
(3) Umsetzen der Produkte aus den Verfahrensschritten (1) und (2) mit mindestens einem Diisocyanat und gegebenenfalls weiteren Reaktanden.

Ein weiterer Gegenstand der vorliegenden Erfindung sind Zusammensetzungen enthaltend diese erfindungsgemäßen alkoxysilyl-modifizierten Polymere.

Die Gegenstände dieser Erfindung ermöglichen die Bereitstellung von Polymeren mit verbessertem Weiterreißwiderstand, insbesondere von Kleb- und/oder Dichtstoffen mit verbessertem Weiterreißwiderstand. Die Bestimmung des Weiterreißwiderstandes im Sinne der vorliegenden Erfindung wird im Beispielteil erläutert.

Die erfindungsgemäßen alkoxysilyl-modifizierten Polymere, das Verfahren zu deren Herstellung sowie Zusammensetzungen enthaltend die erfindungsgemäßen alkoxysilyl-modifizierten Polymere werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden nachfolgend Angaben in Prozent gemacht, so handelt es sich, wenn nicht anders angegeben um Angaben in Gewichts-%. Werden nachfolgend Mittelwerte angegeben, so handelt es sich, wenn nicht anders angegeben, um das Zahlenmittel. Werden nachfolgend Stoffeigenschaften, wie z. B. Viskositäten oder ähnliches angegeben, so handelt es sich, wenn nicht anders angegeben, um die Stoffeigenschaften gemessen bei 25 °C. Die Viskosität wird bei einer Temperatur von 25 °C mit einer Scherrate von 10 1/s mit einem MCR 301 Rheometer der Firma Anton Paar bestimmt.

Der hydrophile oder hydrophobe Charakter der finalen alkoxysilyl-modifizierten Polymere kann durch Art und Aufbau der OH-Gruppe(n) tragenden Starter (A) und/oder (B) und/oder durch ein oder mehrere Comonomere, die während der Synthese eingebracht werden, eingestellt werden.

Nach der EP 2 093 244 konnten erstmals Alkoxysilylgruppen tragende Alkoxylierungsprodukte hergestellt werden, die im Gegensatz zum bis dahin bekannten Stand der Technik Alkoxysilylgruppen entlang der Polyetherkette blockartig oder statistisch verteilt aufweisen und nicht nur an den Termini der Kette lokalisiert sind. Weiterhin zeichnen sich diese Verbindungen durch eine reaktionsbedingt endständige OH-Gruppe aus.

Aus dem Vorhandensein der terminalen OH-Gruppen ergibt sich dem Fachmann, im Gegensatz zum Stand der Technik der terminal alkoxysilyl-modifizierten Polymere, ein weiterer Freiheitsgrad, nämlich die intermediär gebildeten alkoxysilyl-modifizierten Polyetherfragmente mit Hilfe einer chemischen Reaktion weiter zu funktionalisieren und so die anwendungstechnischen Eigenschaften des finalen alkoxysilyl-modifizierten Polymeren nachhaltig positiv zu beeinflussen.

Im Rahmen der vorliegenden Erfindung umfasst der Begriff Alkoxylierungsprodukte oder Polyether sowohl Polyether, Polyetherole, Polyetheralkohole, Polyetheresterole aber auch Polyethercarbonatole, die gegebenenfalls synonym zueinander verwendet werden. Dabei ist nicht erforderlich, dass der Ausdruck "Poly" damit einhergehen muss, dass es sich um eine Vielzahl von Etherfunktionalitäten oder Alkoholfunktionalitäten im Molekül oder Polymer handelt. Vielmehr wird dadurch nur angedeutet, dass zumindest Wiederholungseinheiten einzelner Monomerbausteine oder aber Zusammensetzungen vorliegen, die eine höhere Molmasse und zudem auch noch eine gewisse Polydispersität aufweisen.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Die verschiedenen Fragmente in den nachfolgenden Formeln (Ia), und (II) können statistisch verteilt sein. Statistische Verteilungen können blockweise aufgebaut sein mit einer beliebigen Anzahl an Blöcken und einer beliebigen Sequenz oder sie können einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Die Formeln (I), (Ia) und (II), beschreiben Polymere, die eine Molgewichtsverteilung aufweisen. Daher stellen die Indizes das numerische Mittel über alle Monomereinheiten dar.

Die in den Formeln verwendeten Indexzahlen a, b, c, d, e, f, g, h, i, j, t, u, v, w und y sowie die Wertbereiche der angegebenen Indizes können als Mittelwerte der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (Ia) und (II).

Die erfindungsgemäßen alkoxysilyl-modifizierten Polymere entsprechen Formel (I)

MᵢDⱼURᵤAPᵥ Formel (I)

und zeichnen sich dadurch aus, dass die Fragmente M und D nicht untereinander, sondern über die Gruppen UR und/oder AP miteinander verknüpft sind, und die Gruppen UR und AP nicht untereinander verknüpft sind, sondern dementsprechend über die Fragmente M und D miteinander verknüpft sind. Für die Indices gilt:
i = 1 bis 2, bevorzugt größer 1 bis 2, besonders bevorzugt 2,
j = 1 bis 10, bevorzugt 1 bis 8, besonders bevorzugt 2 bis 6, insbesondere bevorzugt größer, gleich 1,
u = 0 bis 11, bevorzugt 1 bis 8, mehr bevorzugt 2 bis 6, insbesondere 2 bis 4,
v = 0 bis 6, bevorzugt größer 0 bis 4, insbesondere 0,1 bis 2.
mit der Maßgabe, dass u + v ≥ 1 , vorzugsweise ≥ 2 ist,
wobei
M unabhängig voneinander ein alkoxysilyl-modifizierter Polyetherrest, bevorzugt mit 8 bis 400 Kohlenstoffatomen ist, insbesondere bevorzugt ist M ein Rest der Formel (Ia), wobei 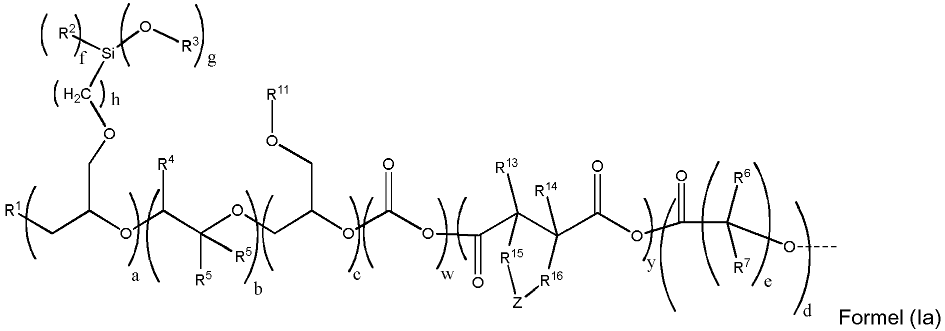
mit
a = 0,1 bis 100, bevorzugt 0,5 bis 50, weiter bevorzugt 1 bis 10, besonders bevorzugt größer 1 bis 5,
b = 2 bis 1000, bevorzugt 2 bis 500, weiter bevorzugt größer 2 bis 400, insbesondere bevorzugt 10 bis 100
c = 0 bis 200, bevorzugt 0 bis 100, weiter bevorzugt größer 0 bis 80, insbesondere bevorzugt ≥0 bis 50, z.B. 1 bis 50,
d = 0 bis 200, bevorzugt 0 bis 100, weiter bevorzugt größer 0 bis 80, insbesondere bevorzugt ≥0 bis 50, z.B. 1 bis 50,
w = 0 bis 200, bevorzugt 0 bis 100, weiter bevorzugt größer 0 bis 80, insbesondere bevorzugt ≥0 bis 50, z.B. 1 bis 50,
y = 0 bis 500, bevorzugt 0 bis 300, besonders bevorzugt 0 bis 200 und insbesondere bevorzugt ≥0 bis 100 ist, z.B. 1 bis 100,
e = 1 bis 10,
f = 0 bis 2
g = 1 bis 3
mit der Maßgabe, dass g + f = 3
h = 0 bis 10, bevorzugt 1 bis 6, insbesondere bevorzugt 1, 2 oder 3
mit der Maßgabe, dass die Gruppen mit den Indices a, b, c, d, w und y frei permutierbar über die Molekülkette sind, wobei die Gruppen mit den Indices w und y jeweils nicht auf sich selbst oder auf die jeweils andere Gruppe folgen dürfen und
mit der Maßgabe, dass die verschiedenen Monomereinheiten sowohl der Fragmente mit den Indices a, b, c, d, w und y als auch der gegebenenfalls vorhandenen Polyoxyalkylenkette des Substituenten R¹ untereinander blockweise aufgebaut sein können, wobei einzelne Blöcke auch mehrfach vorkommen können und untereinander statistisch verteilt sein können, oder aber einer statistischen Verteilung unterliegen und zudem untereinander frei permutierbar, im Sinne von in beliebiger Reihenfolge anzuordnen sind, mit der Einschränkung, dass die Gruppen mit den Indices w und y jeweils nicht auf sich selbst oder auf die jeweils andere Gruppe folgen dürfen,
und wobei
R¹ = unabhängig voneinander ein gesättigter oder ungesättigter, linearer oder verzweigter organischer Kohlenwasserstoffrest ist, der als Heteroatome O, S und / oder N enthalten kann, bevorzugt enthält der Kohlenwasserstoffrest 1 bis 400 Kohlenstoffatome, bevorzugt 2, 3 oder 4 bis 200 Kohlenstoffatome,
R² = unabhängig voneinander eine Alkylgruppe mit 1 bis 8 Kohlenstoffatomen, insbesondere Methyl- oder Ethyl-, Propyl-, Isopropyl-,
R³ = unabhängig voneinander eine Alkylgruppe mit 1 bis 8 Kohlenstoffatomen, insbesondere Methyl-, Ethyl-, Propyl-, Isopropyl-,
R⁴ = unabhängig voneinander ein Wasserstoffradikal, eine Alkylgruppe mit 1 bis 20 Kohlenstoffatomen, eine Aryl- oder Alkarylgruppe, bevorzugt Wasserstoff, Methyl-, Ethyl-, Octyl-, Decyl-, Dodecyl-, Phenyl-, Benzyl-, besonders bevorzugt Wasserstoff, Methyl- oder Ethyl-,
R⁵ = unabhängig voneinander ein Wasserstoffradikal oder eine Alkylgruppe mit 1 bis 8 Kohlenstoffatomen, bevorzugt Wasserstoff, Methyl- oder Ethyl-, insbesondere bevorzugt Wasserstoff,
   oder R⁴ und einer der Reste R⁵ können gemeinsam einen Ring bilden, der die Atome, an die R⁴ und R⁵ gebunden sind, einschließt, bevorzugt enthält dieser Ring 5 bis 8 Kohlenstoffatome,
R⁶ und R⁷ = unabhängig voneinander ein Wasserstoffradikal, eine Alkylgruppe mit 1 bis 20 Kohlenstoffatomen, eine Aryl- oder Alkarylgruppe und/oder eine Alkoxygruppe, bevorzugt eine Methylgruppe,
R¹¹ = unabhängig voneinander ein gesättigter oder ungesättigter, aliphatischer oder aromatischer Kohlenwasserstoffrest mit 2 bis 30 C-Atomen, insbesondere bis 24 C-Atomen, der gegebenenfalls substituiert ist, bevorzugt handelt es sich um eine Alkylgruppe mit 1 bis 16 Kohlenstoffatomen, besonders bevorzugt mit 6 bis 12 Kohlenstoffatomen, deren Kette durch Sauerstoff unterbrochen sein kann und weiter funktionelle Gruppen tragen kann wie z.B. Carboxylgruppen gegebenenfalls mit Alkoholen wie z.B. Methanol, Ethanol, Propanol, Butanol oder Hexanol verestert, Hydroxygruppen gegebenenfalls mit Säuren wie Essigsäure, Buttersäure, Neodecansäure oder (Meth)Acrylsäure bzw. den Polymerisaten der (Meth)Acrylsäure verestert, oder eine Arylgruppe mit 6 bis 20 Kohlenstoffatomen, oder eine Alkarylgruppe mit 7 bis 30, bevorzugt 7 bis 20 Kohlenstoffatomen, bevorzugt ausgewählt aus Methyl-, Ethyl-, Propyl-, Butyl-, iso-Butyl-, tert-Butyl-, 2-Pentyl-, 3-Pentyl-, 2-Methylbutyl-, 3-Methylbutyl-, 2-Methyl-2-butyl-, 3-Methyl-2-butyl-, 2,2-Dimethylpropyl-, Hexyl-, Heptyl-, Octyl-, 2-Ethylhexyl-, 2-Propylheptyl-, 2-Butyloctanyl-, 2-Methylundecyl-, 2-Propylnonyl-, 2-Ethyldecyl-, 2-Pentylheptyl-, 2-Hexyldecyl-, 2-Butyltetradecyl-, 2-Dodecylhexadecyl-, 2-Tetradecyloctadecyl-, 3,5,5-Trimethylhexyl-, Isononanyl-, Isotridecyl-, Isomyristyl-, Isostearyl-, 2-Octyldodecyl- Triphenylmethyl-, C(O)-(CH₂)₅-C-(CH₃)₃- (Rest der Neodecansäure), C₁₂/C₁₄-Alkyl-, Phenyl-, Kresyl-, tert-Butylphenyl- oder Benzylgruppe, besonders bevorzugt eine 2-Ethylhexyl-, C(O)-(CH₂)₅-C-(CH₃)₃- (Rest der Neodecansäure), C₁₂/C₁₄-Alkyl-, Phenyl-, Kresyl-, tert-Butylphenylgruppe, ganz besonders bevorzugt eine tert-Butylphenyl- oder 2-Ethylhexylgruppe,
R¹³, R¹⁴ = unabhängig voneinander Wasserstoff und/oder ein organischer Rest, bevorzugt Alkyl-, Alkenyl-, Alkyliden, Alkoxy-, Aryl- und/oder Aralkylgruppen, oder gegebenenfalls können R¹³ und/oder R¹⁴ auch nicht vorhanden sein, wobei wenn R¹³ und R¹⁴ nicht vorhanden sind, statt der Reste R¹³ und R¹⁴ eine C=C Doppelbindung vorhanden ist,
   das überbrückende Fragment Z kann vorhanden oder nicht vorhanden sein,
   ist das überbrückende Fragment Z nicht vorhanden so sind,
R¹⁵ und R¹⁶ = unabhängig voneinander Wasserstoff und/oder ein organischer Rest, bevorzugt Alkyl-, Alkenyl-, Alkyliden, Alkoxy-, Aryl- und/oder Aralkylgruppen, wobei für den Fall, dass einer der Reste R¹³ oder R¹⁴ nicht vorhanden ist, der jeweilige geminale Rest (also R¹⁵ wenn R¹³ nicht vorhanden ist und R¹⁶ wenn R¹⁴ nicht vorhanden ist) ein Alkylidenrest, bevorzugt Methyliden (=CH₂), ist, ist das überbrückende Fragment Z vorhanden, so sind
R¹⁵ und R¹⁶ = Kohlenwasserstoffreste, die cycloaliphatisch oder aromatisch über das Fragment Z verbrückt sind, wobei Z einen divalenten Alkylen- oder Alkenylenrest darstellt, der weiter substituiert sein kann, das Fragment mit dem Index y kann beispielsweise durch den Einbau cyclischer Anhydride erhalten werden, bevorzugte cyclische Anhydride sind Succinanhydrid, Maleinsäureanhydrid, Itaconanhydrid, Glutaranhydrid, Adipinanhydrid, Citraconanhydrid, Phthalsäureanhydrid, Hexahydrophthalsäureanhydrid und Trimellitanhydrid sowie polyfunktionelle Säureanhydride wie Pyromellit-Dianhydrid, Benzophenon-3,3',4,4'-tetracarbonsäure-Dianhydrid, 1,2,3,4-Butantetracarbonsäuredianhydrid oder radikalisch polymerisierte Homo- oder Copolymerisate von Maleinsäureanhydrid mit Ethylen, Isobutylene, Acrylnitril, Vinylacetat oder Styrol, besonders bevorzugte Anhydride sind Succinanhydrid, Maleinsäureanhydrid, Itaconanhydrid, Glutaranhydrid, Adipinanhydrid, Citraconanhydrid, Phthalsäureanhydrid, Hexahydrophthalsäureanhydrid,
und wobei für das Fragmente D gilt:
D ist ein Polyetherrest -(D^{A})ₜ-D^{X} mit t gleich 2,
wobei
- D^{X}: ein t-valenter funktioneller, gesättigter oder ungesättigter, linearer oder verzweigter organischer Kohlenwasserstoffrest ist, der als Heteroatome O, S, Si und / oder N enthalten kann, wobei jeder der Reste D^{A} kovalent an den Rest D^{X} gebunden ist,
bevorzugt enthält der Kohlenwasserstoffrest 8 bis 1500 Kohlenstoffatome,
bevorzugt ist die Kohlenstoffkette des Kohlenwasserstoffrestes durch Sauerstoffatome unterbrochen,
bevorzugt enthält der Kohlenwasserstoffrest Siliziumatom-haltige Substituenten,
bevorzugt sind die Siliziumatom-haltigen Substituenten Alkoxysilylgruppen,
bevorzugt ist der von Sauerstoffatomen unterbrochene Kohlenwasserstoffrest ein Polyoxyalkylenrest, Polyetherrest und/oder Polyetheralkoxyrest, oder
- D^{X}: kann eine einfach oder mehrfach annelierte phenolische Gruppe sein,
oder besonders bevorzugt kann D^{X} ein t-valenter Rest von einem t-fach hydroxyliertem Alkohol, Polyetherol, Polyesterol, Siloxan, perfluorierten Polyetherol, (poly)-Urethan oder Saccharid, bevorzugt OH-funktionelle Polyether, Polyester, Polycarbonate, Polyetherester oder perfluorierten Polyether und Mischpolymere daraus, insbesondere bevorzugt OH-funktionelle Polyether oder Polyester, sein,
und wobei D^{A} ein Fragment der Formel (II) 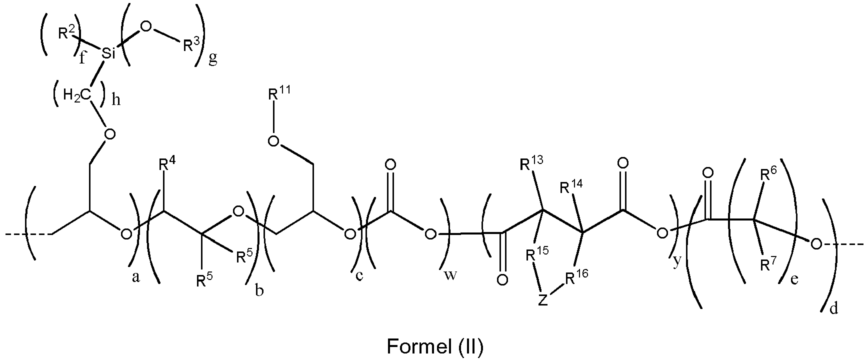 ist, mit a bis h, w und y und R² bis R¹⁶ unabhängig voneinander definiert wie in Formal (la), mit der Maßgabe, dass die Summe aller Indizes b der Formeln (la) und (II) mindestens 5, bevorzugt mindestens 10, insbesondere bevorzugt mindestens 15 ergibt und die Summe aller Indizes a der Formeln (Ia) und (II) größer 2 sein muss,
UR sind unabhängig voneinander gleiche oder verschiedene divalente Reste der Form -U-D^{C}-U-, wobei U eine -C(O)-NH-Gruppe ist, die über den Stickstoff an D^{C} gebunden ist, und
D^{C} unabhängig voneinander ein divalenter substituierter oder unsubstituierter, linearer oder verzweigter, gesättigter oder ungesättigter Kohlenwasserstoffrest mit 1 bis 30 Kohlenstoffatomen, ausgewählt aus Alkyl-, Alkenyl-, Aryl- oder Alkarylresten, welcher gegebenenfalls durch Heteroatome wie O, N und / oder S unterbrochen sein kann, eine Aryl- oder Alkarylgruppe ist, bevorzugt ist D^{C} ein divalenter Kohlenwasserstoffrest mit 6 - 30 Kohlenstoffatomen, bevorzugt ist D^{C} gleich ein Isophoronrest, insbesondere wie in Formel (VIII) angegeben,
- AP: sind unabhängig voneinander gleiche oder verschiedene Reste der allgemeinen Formel (IIIa) oder (IIIb) 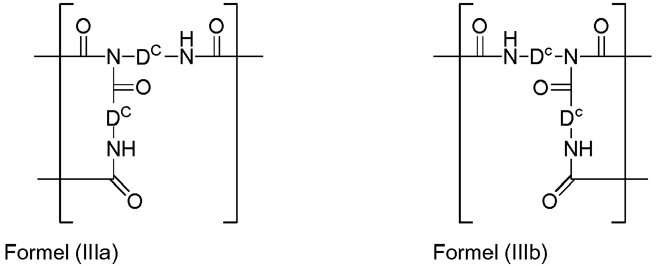 Das Fragment UR kann als Urethaneinheit bezeichnet werden. Das Fragment AP kann als Allophanateinheit bezeichnet werden.

Der Rest R¹¹ kann weitere funktionelle Gruppen tragen wie z.B. (Meth)Acrylsäure bzw. Polymerisate der (Meth)Acrylsäure. Es können also gegebenenfalls vorhandene Hydroxygruppen mit Acrylsäure oder/und Methacrylsäure verestert sein. Die Doppelbindungen der (Meth)Acrylsäure sind polymerisierbar, z. B. radikalisch z. B. UV induziert.

Die Polymerisation der (Meth)Acrylgruppen kann nach der Herstellung des Polyethers geschehen. Sie kann auch mit den erfindungsgemäßen Alkoxylierungsprodukten, mit den Produkten des erfindungsgemäßen Verfahrens, wie auch nach der erfindungsgemäßen Verwendung durchgeführt werden.

Besonders bevorzugt sind alkoxysilyl-modifizierte Polymere der Formel (I) bei denen die Alkoxylierungsprodukte die den Fragmenten D entsprechen auf dihydroxy-funktionellen Startern (A) mit (H-D^{A})ₜD^{X} und t = 2 und die Alkoxylierungsprodukte die den Fragmenten M entsprechen auf monohydroxy-funktionellen Startern (B) mit (H-D^{A})ₜD^{X} und t = 1 beruhen. Besonders bevorzugt sind die Fragmente D und M aus Propylenoxid (PO) und 3-Glycidyloxypropyltriethoxysilan (GLYEO) und optional weiterhin Ethylenoxid (EO) und/oder Glycidylether(n) als Monomereinheiten aufgebaut. Insbesondere bevorzugt sind die Fragmente D und M ausschließlich aus GLYEO und PO als Monomereinheiten aufgebaut.

Das Fragment D^{x} des Starters (B) mit (H-D^{A})ₜD^{X} und t = 1 ist bevorzugt unabhängig voneinander ein OHfunktioneller monovalenter linearer oder verzweigter, gesättigter oder ungesättigter Kohlenwasserstoffrest mit 1 bis 500 Kohlenstoffatomen, bevorzugt ausgewählt aus Alkyl-, Alkenyl-, Aryl- oder Alkarylresten, welcher gegebenenfalls durch Heteroatome wie O, N und / oder S unterbrochen und zudem weiter substituiert sein kann, z.B. mit Säureester-, Amid-, Alkyl-trialkoxysilan- oder Alkyl-alkyldialkoxysilan-Gruppen, wobei der Kohlenwasserstoffrest vorzugsweise von 1 bis 30, bevorzugt von 2 bis 18 und besonders bevorzugt von 3 bis 12 Kohlenstoffatome aufweist. Besonders bevorzugt handelt es sich um Methanol, Ethanol, Propanol, Isopropanol, Butanol, iso-Butanol, tert-Butanol, 2,2,4-Trimethyl-1,3-pentandiol monoisobutyrat (Texanol von Exxon), Octanol, 2-Ethylhexanol, 2-Propylheptanol, Allylalkohol, Decanol, Dodecanol, C₁₂/C₁₄-Fettalkohol, Phenol, alle Konstitutionsisomere des Kresols, Benzylalkohol, Stearylalkohol, insbesondere um Butanol, 2,2,4-Trimethyl-1,3-pentandiol monoisobutyrat (Texanol von Exxon), Allylalkohol, 2-Ethylhexanol oder 2-Propylheptanol.

In einer besonderen Ausführungsform der Erfindung enthält der OH-funktionelle Kohlenwasserstoffrest 7 bis 100 Kohlenstoffatome, wobei die Kohlenstoffkette des Kohlenwasserstoffrestes bevorzugt durch Sauerstoffatome unterbrochen ist, bevorzugt ist der von Sauerstoffatomen unterbrochene Kohlenwasserstoffrest ein Polyoxyalkylenrest, Polyetherrest und/oder Polyetheralkoxyrest, oder auch ein Polyester-, Polycarbonat-, Polyetheresterrest oder Mischungen aus den zuvor genannten Resten.

Bei den mono-hydroxy-funktionellen Verbindungen, die als Starter (B) eingesetzt werden können, handelt es sich vorzugsweise um Verbindungen mit Molmassen von 32 bis 2.000 g/mol, besonders bevorzugt 50 bis 1000 g/mol, insbesondere 60 bis 200 g/mol eingesetzt. Diese Verbindungen können in beliebigen Mischungen miteinander oder als Reinsubstanz eingesetzt werden. Es können auch seitenständig mit Alkoxysilylgruppen enthaltende Substituenten oder direkt mit Alkoxysilylgruppen substituierte Hydroxylverbindungen, insbesondere wie die in EP 2093244 beschriebenen Silylpolyether als Starter (B) eingesetzt werden.

Das Fragment D^{x} des Starters (A) mit (H-D^{A})ₜD^{X} und t = 2 ist bevorzugt eine Verbindung ausgewählt aus niedermolekularen Verbindungen wie Ethylenglykol, Propylenglykol, Di-/Triethylenglykol, 1,2-Propylenglykol, Di-/Tripropylenglykol, Neopentylglykol, 1,4-Butandiol, 1,2-Hexandiol und 1,6-Hexandiol, Trimethylolpropan- oder Glycerinmonoether wie z. B. -monoallylether eingesetzt werden, sowie hochmolekularen Verbindungen wie Polyethylenoxiden, Polypropylenoxiden, Polyestern, Polycarbonaten, Polycarbonatpolyolen, Polyesterpolyolen, Polyetherestern, Polyetherolen, Polyethercarbonaten, Polyamiden und Polyurethanen, die gegebenenfalls eine oder mehrere Alkoxysilylgruppen aufweisen können.

Bevorzugt einsetzbar sind Starter (A) und/oder (B), die einen Schmelzpunkt von weniger als 150°C, besonders bevorzugt weniger als 100°C und eine Molmasse zwischen 200 - 8000 g/mol, insbesondere bevorzugt von 400 - 4000 g/mol besitzen.

Bevorzugte Starter (A) und/oder (B) sind hydroxyl-terminierte Polyether, die durch eine Reaktion von Propylenoxid gegebenenfalls in Kombination mit Ethylenoxid hergestellt wurden. Alle genannten Starter können auch in beliebigen Mischungen eingesetzt werden.

Besonders bevorzugte Starter (A) sind hydroxylgruppenhaltige Polyether wie z. B. Desmophen® 2061 BD oder Acclaim 4200 (Bayer Material Science) und hydroxylgruppenhaltige Polyester wie z. B. Desmophen® 1700 (Bayer Material Science), Polyesterpolyole, wie z. B. Stepanpol® PS-2002 (Stepan Company), Priplast 1838 (Croda) und hydroxylgruppenhaltige Polycarbonate, wie beispielsweise Oxymer® M112 (Perstorp), Desmophen® C1200 (Bayer), Desmophen® C2200 (Bayer Material Science). Insbesonders bevorzugte Starter (A) sind Polypropylenglycole (Desmophen® 2061 BD oder Acclaim 4200 (Bayer Material Science)) und Polytetrahydrofurane (erhältlich in diversen Molgewichten als Terathane® (Invista) und PolyTHF® (BASF) z.B. PolyTHF 2000)).

Weiterhin besonders bevorzugt sind erfindungsgemäße alkoxysilyl-modifizierte Polymere, die bezogen auf das individuelle Molekül, im numerischen Mittel mehr als eine Alkoxysilylgruppe pro Gruppe UR aufweisen. Weiterhin bevorzugt sind alkoxysilyl-modifizierte Polymere, in denen der Index i gleich 2, der Index j gleich 1 bis 3 und der Index u gleich 2 bis 4 ist.

In einer bevorzugten Ausführungsform zeichnen sich die erfindungsgemäßen alkoxysilyl-modifizierten Polymere dadurch aus, dass in Formel (I) das Verhältnis der Indices a der Fragmente M zu D der folgenden Gleichung gehorcht: a (M) > 2 * a (D).

In einer ganz besonders bevorzugten Ausführungsform handelt es sich um erfindungsgemäße alkoxysilyl-modifizierte Polymere der Formel (I) mit
i = 1 bis 2, bevorzugt größer 1 bis 2, besonders bevorzugt 2
j = 1 bis 6, bevorzugt 1, 2, 3 oder 4
u = j + 1
v = 0
wobei M Formel (la) entspricht mit
a = 0,1 bis 50, bevorzugt 0,5 bis 20, weiter bevorzugt 1 bis 4,
b = 10 bis 500, weiter bevorzugt 12 bis 100
c = 0 bis 20, bevorzugt 0 bis 4
d = 0 bis 20, bevorzugt 0
w = 0 bis 20, bevorzugt 0
y = 0 bis 20, bevorzugt 0,
e = 1 bis 10,
f = 0 bis 2
g = 1 bis 3
mit der Maßgabe, dass g + f = 3
h = 1, 2 oder 3 und
R¹ = unabhängig voneinander ein gesättigter oder ungesättigter, linearer oder verzweigter organischer Kohlenwasserstoffrest ist, der als Heteroatome O, S und / oder N enthalten kann, bevorzugt enthält der Kohlenwasserstoffrest 1 bis 400 Kohlenstoffatome, bevorzugt 2, 3 oder 4 bis 200 Kohlenstoffatome, besonders bevorzugt ein Alkylrest mit 2 bis 12, bevorzugt mit 3 bis 6,
und wobei D Formel (II) entspricht mit
a = 0 bis 10, bevorzugt größer 0,1 bis 5, weiter bevorzugt 0,2 bis 2, insbesondere 0,25 bis 1,
b = 10 bis 700, weiter bevorzugt 12 bis 350,
c = 0 bis 20, bevorzugt 0 bis 10
d = 0 bis 20, bevorzugt 0
w = 0 bis 20, bevorzugt 0
y = 0 bis 20, bevorzugt 0,
e = 1 bis 10,
f = 0 bis 2
g = 1 bis 3
mit der Maßgabe, dass g + f = 3
h = 1, 2 oder 3
und wobei für Formel (Ia) und Formel (II) gilt (hier nicht explizit genannte Rest gelten wie vorab definiert)
- R² =: unabhängig voneinander eine Methyl- oder Ethyl-, Propyl-, oder Isopropylgruppe, bevorzugt eine Methyl- oder Ethylgruppe
- R³ =: unabhängig voneinander eine Methyl- oder Ethyl-, Propyl-, oder Isopropylgruppe, bevorzugt eine Methyl- oder Ethylgruppe
- R⁴ =: unabhängig voneinander Wasserstoff oder eine Methyl-, Ethyl-, Octyl-, Decyl-, Dodecyl-, Phenyl- oder Benzylgruppe, besonders bevorzugt Wasserstoff oder eine Methyl- oder Ethylgruppe,
- R⁵ =: unabhängig voneinander Wasserstoff, Methyl- oder Ethyl-, insbesondere bevorzugt Wasserstoff,
- R¹¹ =: unabhängig voneinander eine gegebenenfalls substituierte Alkylkette mit 4 bis 20 Kohlenstoffatomen, bevorzugt mit 5 bis 16 Kohlenstoffatomen, besonders bevorzugt mit 6 bis 12 Kohlenstoffatomen ist, bevorzugt ausgewählt aus Methyl-, Ethyl-, Propyl-, Butyl-, iso-Butyl-, tert-Butyl-, 2-Pentyl-, 3-Pentyl-, 2-Methylbutyl-, 3-Methylbutyl-, 2-Methyl-2-butyl-, 3-Methyl-2-butyl-, 2,2-Dimethylpropyl-, Hexyl-, Heptyl-, Octyl-, 2-Ethylhexyl-, 2-Propylheptyl-, 2-Butyloctanyl-, 2-Methylundecyl-, 2-Propylnonyl-, 2-Ethyldecyl-, 2-Pentylheptyl-, 2-Hexyldecyl-, 2-Butyltetradecyl-, 2-Dodecylhexadecyl-, 2-Tetradecyloctadecyl-, 3,5,5-Trimethylhexyl-, Isononanyl-, Isotridecyl-, Isomyristyl-, Isostearyl-, 2-Octyldodecyl- Triphenylmethyl-, C(O)-(CH₂)₅-C-(CH₃)₃- (Rest der Neodecansäure), C₁₂/C₁₄-Alkyl-, Phenyl-, Kresyl-, tert-Butylphenyl- oder Benzylgruppe, besonders bevorzugt eine 2-Ethylhexyl-, C(O)-(CH₂)₅-C-(CH₃)₃- (Rest der Neodecansäure), C₁₂/C₁₄-Alkyl-, Phenyl-, Kresyl-, tert-Butylphenylgruppe, ganz besonders bevorzugt eine tert-Butylphenyl- oder 2-Ethylhexylgruppe,
und wobei für UR gilt
- UR: sind unabhängig voneinander gleiche oder verschiedene divalente Reste der Form -U-D^{C}-U-, mit D^{C} unabhängig voneinander ein divalenter substituierter oder unsubstituierter, linearer oder verzweigter, gesättigter oder ungesättigter Kohlenwasserstoffrest mit 1 bis 30 Kohlenstoffatomen, bevorzugt ist D^{C} gleich ein Isophoronrest, insbesondere wie in Formel (VIII) angegeben,
da derartige alkoxysilyl-modifizierte Polymere enthaltend die Polyetherfragmente D verknüpft mit diesen Polyetherfragmenten M besonders vorteilhafte anwendungstechnische Eigenschaften aufweisen.

In der EP 2093244 wird beschrieben, dass man Epoxidfunktionen tragende Alkoxysilane in vorteilhafter Weise in Gegenwart bekannter Doppelmetallcyanidkatalysatoren selektiv alkoxylieren kann. Mit dem dort offenbarten Verfahren, auf das hiermit verwiesen wird, erschließt sich die Möglichkeit, in reproduzierbarer Weise die ein- und/oder mehrfache Alkoxysilylgruppen-Modifizierung von Polyoxyalkylenverbindungen nicht nur terminal, sondern auch innerhalb der Sequenz von Oxyalkyleneinheiten vorzunehmen. Die Offenbarung der EP 2093244, auf deren Inhalt insbesondere mit Blick auf die dort offenbarten Strukturen und Verfahren hiermit verwiesen sei, ist vollumfänglich als Teil und Bestandteil dieser Beschreibung anzusehen.

Die erfindungsgemäßen alkoxysilyl-modifizierten Polymere sind bevorzugt mittels eines Verfahrens zugänglich, umfassend die Schritte
(1) Umsetzen mindestens eines dihydroxy-funktionellen Starters (A), ausgewählt aus der Gruppe der Alkohole oder Polyetherole mit mindestens einem Alkylenoxid und mindestens einem Alkoxysilylgruppen tragenden Epoxid,
(2) Umsetzen mindestens eines monohydroxy-funktionellen Starters (B), ausgewählt aus der Gruppe der Alkohole oder Polyetherole mit mindestens einem Alkylenoxid und mindestens einem Alkoxysilylgruppen tragenden Epoxid, und
(3) Umsetzen der Produkte aus den Verfahrensschritten (1) und (2) mit mindestens einem Diisocyanat und gegebenenfalls weiteren Reaktanden.

Die in den Verfahrensschritten (1) und (2) erhaltenen OH-funktionellen alkoxysilyl-modifizierten Alkoxylierungsprodukte können im Verfahrensschritt (3), bevorzugt mit Diisocyanaten zu den erfindungsgemäßen alkoxysilyl-modifizierten Polymeren gemäß Formel (I) umgesetzt werden.

Die Verfahrensschritte (1) und (2) können in beliebiger Reihenfolge durchgeführt werden.

Um besonders vorteilhafte alkoxysilyl-modifizierte Polymere zu erhalten ist es bevorzugt, den Verfahrensschritt (3) zweistufig durchzuführen. In der ersten Stufe (3a) wird zunächst das Alkoxylierungsprodukt H-D-H aus Verfahrensschritt (1) dergestalt mit einem Diisocyanat zur Reaktion gebracht, dass sich ein NCO-funktionelles Intermediat bildet, welches anschließend in der zweiten Stufe (3b) mit den monohydroxy-funktionellen Alkoxylierungsprodukt H-M aus Verfahrensschritt (2) zum finalen Polymer umgesetzt wird.

Bei einer derartigen Umsetzung der terminalen α,ω-OH-Gruppen der Alkoxylierungsprodukte aus Verfahrensschritt (1) H-D-H mit 1 mol Diisocyanat pro mol OH reagiert formell eine Isocyanat-Gruppe des Diisocyanats mit einer OH-Gruppe und die zweite Isocyanatgruppe verbleibt unreagiert im Reaktionsgemisch bis eine weitere OH-Gruppe bevorzugt in Form einer mono-hydroxy-funktionellen Komponente H-M aus Verfahrensschritt (2) zur NCO-Abreaktion bereitgestellt wird. Die Reaktion einer DiolKomponente mit zwei Molen Diisocyanat ist jedoch nicht 100%ig selektiv, so erhält man, wie dem Fachmann bekannt, als Nebenprodukte auch immer Reaktionsprodukte wo beispielsweise mehrere Diole über ein oder mehrere Diisocyanate verknüpft sind (beispielsweise OCN-D^{C}-UR-D-UR-D-UR-D^{C}-NCO). Die Bildung derartiger Nebenprodukte kann durch viele Faktoren wie beispielsweise die Stöchiometrien der einzelnen Reaktionspartner, Art und Menge des Katalysators, Temperaturführung, usw. beeinflusst, jedoch nicht gänzlich vermieden werden. Gleiches gilt auch für weitere Nebenreaktionen (z.B. Addition einer Isocyanat-Gruppe an eine Urethan-Einheit zur Allophanat-Gruppe) ein.

Einsetzbare Alkylenoxidverbindungen, die zu den in den Formeln (la) und (II) angegebenen Fragmenten mit dem Index b führen, sind z.B. Ethylenoxid, 1,2-Epoxypropan (Propylenoxid), 1,2-Epoxy-2-methylpropan (Isobutylenoxid), Epichlorhydrin, 2,3-Epoxy-1-propanol, 1,2-Epoxybutan (Butylenoxid), 2,3-Epoxybutan, 2,3-Dimethyl-2,3-epoxybutan, 1,2-Epoxypentan, 1,2-Epoxy-3-methylpentan, 1,2-Epoxyhexan, 1,2-Epoxycyclohexan, 1,2-Epoxyheptan, 1,2-Epoxyoctan, 1,2-Epoxynonan, 1,2-Epoxydecan, 1,2-Epoxyundecan, 1,2-Epoxydodecan, Styroloxid, 1,2-Epoxycyclopentan, 1,2-Epoxycyclohexan, Vinylcyclohexenoxid, (2,3-Epoxypropyl)benzol, Vinyloxiran, 3-Phenoxy-1,2-epoxypropan, 2,3-Epoxymethylether, 2,3-Epoxyethylether, 2,3-Epoxylisopropylether, (3,4-Epoxybutyl)stearat, 4,5-Epoxypentylacetat, 2,3-Epoxylpropanmethacrylat, 2,3-Epoxylpropanacrylat, Gylcidylbutyrat, Methylglycidat, Ethyl-2,3-epoxybutanoat, 4-(Trimethylsilyl)butan-1,2-epoxid, 4-(Triethylsilyl)butan-1,2-epoxid, 3-(Perfluoromethyl)-1,2-epoxypropan, 3-(Perfluoroethyl)-1,2-epoxypropan, 3-(Perfluorobutyl) -1,2-epoxypropan, 3-(Perfluorohexyl)-1,2-epoxypropan, 4-(2,3-Epoxypropyl)morpholin, 1-(Oxiran-2-ylmethyl)pyrrolidin-2-on. Bevorzugt eingesetzt werden Ethylenoxid, Propylenoxid und Butylenoxid. Besonders bevorzugt werden Ethylenoxid und Propylenoxid eingesetzt.

Eine nicht abschließende Sammlung von Lactonen, welche durch Ringöffnung zu den in den Formeln (la) und (II) angegebenen Fragmenten mit dem Index d führen, sind Valerolactone oder Caprolactone zu nennen, die beide unsubstituiert oder mit Alkylgruppen, bevorzugt Methylgruppen, substituiert sein können. Vorzugsweise werden ε-Caprolacton oder δ-Vaterolacton eingesetzt, insbesondere ε-Caprolacton.

Als gesättigte, ungesättigte oder aromatische cyclische Dicarbonsäureanhydride, welche durch Einreaktion zu den Fragmenten mit dem Index y führen, werden bevorzugt Bernsteinsäureanhydrid, Oct(en)yl-, Dec(en)yl- und Dodec(en)ylbernsteinsäueanhydrid, Maleinsäureanhydrid, Itaconsäureanhydrid, Phthalsäureanhydrid, Hexahydro-, Tetrahydro-, Dihydro-, Methylhexahydro- und Methyltetrahydrophthalsäureanhydrid eingesetzt. Während des Alkoxylierungsprozesses können die jeweiligen Anhydridmonomere in beliebiger Reihenfolge und variabler Menge nacheinander oder zeitlich parallel zum Epoxidfeed unter Ringöffnung zu Polyetherestern copolymerisiert werden. Auch Mischungen der genannten Anhydride sind einsetzbar. Des Weiteren ist es möglich die Anhydride dem Starter D^{X} vor Reaktionsbeginn zuzusetzen und auf eine Zudosage wie zuvor beschrieben zu verzichten. Es ist aber auch möglich sowohl dem Starter D^{X} Anhydride zuzusetzen und im weiteren Reaktionsverlauf noch weiteres Anhydrid während der Alkoxylierung zuzudosieren.

Besonders bevorzugt werden Bernsteinsäureanhydrid, Maleinsäureanhydrid, Phthalsäureanhydrid, und Hexahydrophthalsäureanhydrid eingesetzt, insbesondere Maleinsäureanhydrid und Hexahydrophthalsäureanhydrid.

Als Glycidylether, welche zu den in den Formeln (la) und (II) angegebenen Fragmenten mit dem Index c führen, werden bevorzugt Verbindungen der allgemeinen Formel (IV) 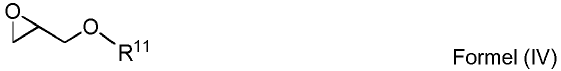 mit R¹¹ wie oben definiert eingesetzt.

Bevorzugt entspricht R¹¹ einer Methyl-, Ethyl-, iso-Butyl-, tert-Butyl-, Hexyl-, Octyl-, 2-Ethylhexyl-, -C(O)-(CH₂)₅-C-(CH₃)₃ (Rest aus der Neodecansäure, erhältlich z.B. als Cardura E 10 P bei Momentive), C₁₂/C₁₄-, Phenyl-, Kresyl-, oder tert-Butylphenylgruppe oder/und einer Allylgruppe, besonders bevorzugt handelt es sich um eine Allyl-, Kresyl-, 2-Ethylhexyl-, -C(O)-(CH₂)₅-C-(CH₃)₃ oder C₁₂/C₁₄-Gruppe. Insbesondere bevorzugt werden 2-Ethylhexyl- (erhältlich beispielsweise als Grilonit RV 1807, Grilonit RV 1807 4.1 bzw. IPOX RD 17) und C₁₂-C₁₄-Glycidylether (erhältlich beispielsweise als Ipox® RD 24) eingesetzt.

Je nach verwendetem epoxidfunktionellem Alkoxysilan und evtl. eingesetzten weiteren Monomeren, können modifizierte Alkoxylierungsprodukte gemäß Formel (I) hergestellt werden, sowie beliebig aufgebaute Gemische.

Einsetzbare Alkylenoxidverbindungen, die zu den in den Formeln (la) und (II) angegebenen Fragmenten mit dem Index a führen, können vorzugsweise der allgemeinen Formel (V) 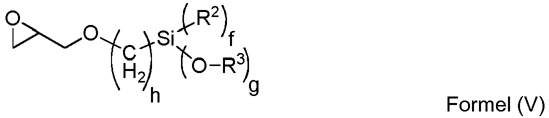 mit f, g, h, R² und R³ wie oben definiert, entsprechen.

Eine nicht abschließende Sammlung von Epoxidgruppen-substituierten Alkoxysilanen, gemäß Formel (V) umfasst zum Beispiel 3-Glycidyloxypropyltrimethoxysilan, 3-Glycidyloxypropyltriethoxysilan, 3-Glycidyloxypropyltripropoxysilan, 3-Glycidyloxypropyltriisopropoxysilan, Bis(3-Glycidyloxypropyl)dimethoxysilan, Bis(3-Glycidyloxypropyl)diethoxysilan, 3-Glycidyloxyhexyltrimethoxysilan, 3-Glycidyloxyhexyltriethoxysilan, 3-Glycidyloxypropyl-methyldimethoxysilan, 3-Glycidyloxypropyl-ethyl-diethoxysilan.

Bevorzugt werden im erfindungsgemäßen Verfahren als Verbindungen der Formel (V) 3-Glycidyloxypropyltrimethoxy- oder -triethoxysilan eingesetzt, die z.B. unter den Handelsnamen DYNASYLAN® GLYMO bzw. DYNASYLAN® GLYEO (Warenzeichen der Evonik Degussa GmbH) erhältlich sind. Besonders bevorzugt ist der Einsatz von Glycidyloxy-propyltriethoxysilan, da auf diese Weise bei der Anwendung als feuchtigkeitsvernetzende Komponenten Methanolemissionen vermieden werden können.

Unter den Verbindungen, die als Starter (B) eingesetzt werden können und dem Rest R¹ der Formel (Ia) entsprechen, werden im Rahmen der vorliegenden Erfindung Substanzen verstanden, welche die Endgruppe des finalen alkoxysilyl-modifizierten Polymers sein können.

Der Rest R¹ entstammt vorzugsweise einer hydroxylgruppenhaltigen Verbindung der Formel (VI)

R¹-H Formel (VI)

mit R¹ = R^{X}-O- und R^{x} = organischer Rest, der gegebenenfalls eine oder mehrere Alkoxysilylgruppen aufweisen kann, bei denen also der in Formel (VI) gezeigte Wasserstoff Teil der Hydroxygruppe ist. Es werden vorzugsweise Verbindungen mit Molmassen von 31 bis 10.000 g/mol, besonders bevorzugt 50 bis 2000 g/mol, insbesondere 60 bis 200 g/mol eingesetzt. Diese Verbindungen können in beliebigen Mischungen miteinander oder als Reinsubstanz eingesetzt werden. Es können auch seitenständig mit Alkoxysilylgruppen enthaltende Substituenten oder direkt mit Alkoxysilylgruppen substituierte Hydroxylverbindungen, wie insbesondere die in EP 2093244 beschriebenen Silylpolyether als Startverbindungen eingesetzt werden.

Die in dem erfindungsgemäßen Verfahren eingesetzte Verbindung der Formel (VI) ist vorzugsweise ausgewählt aus der Gruppe der Alkohole, Polyetherole oder Phenole. Vorteilhaft werden niedermolekulare Polyetherole mit Molmassen von 50 bis 2000 g/mol, die ihrerseits zuvor entweder durch alkalische- oder DMC-katalysierte Alkoxylierung hergestellt wurden, verwendet.

Neben Verbindungen mit aliphatischen und cycloaliphatischen OH-Gruppen eignen sich beliebige Verbindungen mit OH-Funktionen. Hierzu gehören beispielsweise Phenol, Alkyl- und Arylphenole.

Als Starter (A) werden vorzugsweise Verbindungen mit Molmassen von 62 bis 10.000 g/mol, bevorzugt 92 bis 7000 g/mol, besonders bevorzugt 122 bis 5000 g/mol und insbesondere bevorzugt 2000 bis 4000 g/mol, eingesetzt. Die Startverbindungen können in beliebigen Mischungen miteinander oder als Reinsubstanz eingesetzt werden. Es können auch seitenständig Alkoxysilylgruppen enthaltende Substituenten oder direkt mit Alkoxysilylgruppen substituierte Hydroxylverbindungen, wie insbesondere die in EP 2093244 beschriebenen Silylpolyether als Startverbindungen eingesetzt werden. Vorteilhaft werden niedermolekulare Polyetherole mit Molmassen von 62 bis 4000 g/mol, die ihrerseits zuvor durch DMC-katalysierte Alkoxylierung hergestellt wurden, als Starterverbindungen verwendet.

Neben Verbindungen mit aliphatischen und cycloaliphatischen OH-Gruppen eignen sich beliebige Verbindungen mit OH-Funktionen. Hierzu gehören beispielsweise Bisphenole, wie z.B. Bisphenol A als Startverbindungen.

Die mittleren Molmassen M_{w} der Alkoxylierungsprodukte H-D-H des Verfahrensschritts (1) betragen vorzugsweise zwischen 2000 bis 25000 g/mol, bevorzugt zwischen 4000 und 20000 g/mol und besonders bevorzugt von 6000 bis 15000 g/mol. Vorzugsweise sind die Alkoxylierungsprodukte H-D-H des Verfahrensschrittes (1) H-D-H bei Raumtemperatur flüssig.

Die mittleren Molmassen M_{w} der Alkoxylierungsprodukte H-M des Verfahrensschritts (2) betragen vorzugsweise zwischen 500 bis 15000 g/mol, bevorzugt zwischen 1000 und 10000 g/mol und besonders bevorzugt von 1500 bis 5000 g/mol. Vorzugsweise sind die Alkoxylierungsprodukte H-M des Verfahrensschrittes (2) bei Raumtemperatur flüssig.

Die Hydrophilie / Hydrophobie der Molekülteile M und D der erfindungsgemäßen Alkoxylierungsprodukte kann durch die Wahl geeigneter Startermoleküle und/oder geeigneter Comonomere für die Alkoxylierung eingestellt werden.

Die alkoxysilyl-modifizierten Polymere der Formel (I) zeichnen sich dadurch aus, dass sie hinsichtlich Strukturaufbau und Molmasse gezielt und reproduzierbar hergestellt werden können. Die Sequenz der Monomereinheiten kann in weiten Grenzen variabel gestaltet werden. Epoxidmonomere können beliebig blockartig aneinander gereiht oder statistisch in die Polymerkette eingebaut sein. Die durch die Reaktion unter Ringöffnung der Reaktionskomponenten in die entstehende Polymerkette eingefügten Fragmente sind in ihrer Sequenz untereinander frei permutierbar, im Sinne von in beliebiger Reihenfolge anzuordnen, mit der Einschränkung, dass cyclische Anhydride sowie Kohlendioxid statistisch insertiert, also nicht in homologen Blöcken, in der Polyetherstruktur vorliegen, sowie nicht in direkter Nachbarschaft zueinander.

Die in den hier angeführten Formeln wiedergegebenen Indexzahlen und die Wertbereiche der angegebenen Indizes verstehen sich daher als die Mittelwerte der möglichen statistischen Verteilung der tatsächlichen vorhandenen Strukturen und/oder deren Mischungen. Dies gilt auch für solche an sich exakt wiedergegebene Strukturformeln, wie beispielsweise für Formel (Ia) und/oder (II).

Je nach verwendetem epoxidfunktionellem Alkoxysilan und evtl. eingesetzten weiteren Monomeren, sowie evtl. auch Kohlendioxid können ester- oder carbonat-modifizierte Alkoxysilylpolyether erhalten werden. Bevorzugt ist die Alkoxysilyleinheit in der Verbindung der Formeln (Ia) und (II) eine Trialkoxysilyleinheit, insbesondere Triethoxysilyleinheit.

Wie ²⁹Si-NMR- und GPC-Untersuchungen ergeben, bedingt durch das verfahrensbedingte Vorhandensein von kettenendständigen OH-Gruppen besteht die Möglichkeit zu Umesterungsreaktionen am Siliziumatom sowohl während der DMC-katalysierten Herstellung als auch z.B. in einem nachgeschalteten Prozessschritt. Dabei wird formal der über ein Sauerstoffatom an das Silizium gebundene Alkylrest R³ gegen einen langkettigen modifizierten Alkoxysilylpolymerrest ausgetauscht. Bimodale wie auch multimodale GPC- Kurven belegen, dass die Alkoxylierungsprodukte neben den nicht umgeesterten Spezies, wie sie in Formel (I) wiedergegeben sind, auch solche mit der doppelten, zum Teil dreifachen oder gar vielfachen Molmasse enthalten

Somit stellen die Alkoxylierungsprodukte Mischungen dar, die auch Verbindungen enthalten können, in denen die Summe der Indices f + g in den Formeln (Ia) und (II) im statistischen Mittel kleiner als 3 ist, da ein Teil der OR-Gruppen durch Silylpolyethergruppen ersetzt werden kann. Die Zusammensetzungen enthalten somit Spezies, die am Siliziumatom unter Abspaltung von R³-OH und Kondensationsreaktion mit der reaktiven OH-Gruppe eines weiteren Moleküls der Formeln (Ia) und/oder (II) ausgebildet werden. Diese Reaktion kann mehrfach ablaufen bis z.B. alle R³O-Gruppen am Silizium gegen weitere Moleküle der Formeln (Ia) und/oder (II) ausgetauscht sind. Das Vorhandensein von mehr als einem Signal in typischen ²⁹Si-NMR-Spektren dieser Verbindungen untermauert das Auftreten von Silylgruppen mit unterschiedlichem Substitutionsmuster.

Die angegebenen Werte und Vorzugsbereiche für die Indizes a, b, c, d, e, f, g, h, i, j, t, u, v, w und y der Verbindungen der Formeln (I), (Ia) und (II) sind somit als Mittelwerte über die verschiedenen, einzeln nicht fassbaren Spezies zu verstehen. Die Vielfalt an chemischen Strukturen und Molmassen spiegelt sich auch in den für alkoxysilyl-modifizierten Polymere der Formel (I) typischen und für konventionelle DMCbasierende Polyether völlig ungewöhnlichen breiten Molmassenverteilungen von M_{w}/Mₙ von meist ≥ 1,5 wider.

Untrennbar mit dem in der EP 2 093 244 dargelegten Verfahren der Alkoxylierung von expoxyfunktionellen Alkoxysilanen verbunden, ist die Besonderheit, dass an dem Kettenterminus bzw. den Kettentermini immer eine OH-Funktionalität vorhanden ist, hervorgegangen aus der Epoxidringöffnung des jeweils letzten Epoxidmonomers unter Anknüpfung an das OH-funktionelle Ende der wachsenden Kette.

Die erfindungsgemäßen Produkte können auf unterschiedlichste Weise, insbesondere durch Verfahren, die sich an das in EP 2 093 244, EP 2415796 (US 2012/028022) oder EP 2415797 (US 2012/029090) beschriebene Verfahren anlehnen, hergestellt werden. Vorzugsweise werden die erfindungsgemäßen Alkoxylierungsprodukte durch das nachfolgend beschriebene erfindungsgemäße Verfahren hergestellt.

Das bevorzugte erfindungsgemäße Verfahren zur Herstellung derartiger Polymere, umfasst die Schritte (1)
Umsetzen mindestens eines dihydroxy-funktionellen Starters (A), ausgewählt aus der Gruppe der Alkohole oder Polyetherole mit mindestens einem Alkylenoxid und mindestens einem Alkoxysilylgruppen tragenden Epoxid,
(2) Umsetzen mindestens eines monohydroxy-funktionellen Starters (B), ausgewählt aus der Gruppe der Alkohole oder Polyetherole mit mindestens einem Alkylenoxid und mindestens einem Alkoxysilylgruppen tragenden Epoxid, und
(3) Umsetzen der Produkte aus den Verfahrensschritten (1) und (2) mit mindestens einem Diisocyanat und gegebenenfalls weiteren Reaktanden.

Die bevorzugte Ausgestaltung von Verfahrensschritt (1) wird nachfolgend beschrieben:
Im Verfahrensschritt (1) wird eine DMC-katalysierte Alkoxylierung eines Starters (A) mit Epoxid-Gruppen aufweisenden Verbindungen (Alkylenoxiden und Glycidylethern) durchgeführt.

Zum Starten der Alkoxylierungsreaktion nach erfindungsgemäßem Verfahren wird das Startgemisch, bestehend aus einem oder mehreren Starter (A) und dem Doppelmetallcyanid-Katalysator, der gegebenenfalls zuvor in einem Suspendiermittel aufgeschlämmt wurde, im Reaktor vorgelegt.

Als Suspensionsmittel können entweder ein Polyether oder inerte Lösungsmittel benutzt werden oder vorteilhaft auch eine oder mehrere Startverbindungen, oder alternativ ein Gemisch aus beiden Komponenten.

Der vorgelegten Startmischung wird Propylenoxid oder zumindest eine andere Epoxidverbindungen zudosiert. Zum Starten der Alkoxylierungsreaktion und zur Aktivierung des Doppelmetallcyanid-Katalysators wird zunächst meist nur ein Teil der insgesamt zu dosierenden Menge an Epoxid zugefügt. Das molare Verhältnis von Epoxid zu den reaktiven Gruppen des Starters, insbesondere den OH-Gruppen im Startgemisch, liegt in der Startphase dabei vorzugsweise zwischen 0,1 zu 1 bis 10 zu 1, bevorzugt zwischen 0,2 zu 1 bis 5 zu 1, insbesondere zwischen 0,4 zu 1 bis 3 zu 1. Es kann vorteilhaft sein, wenn vor der Zugabe des Epoxids gegebenenfalls vorhandene, die Reaktion inhibierende Stoffe aus dem Reaktionsgemisch z.B. durch Destillation gegebenenfalls im Vakuum entfernt werden.

Das Starten der exothermen Reaktion kann z.B. durch eine Druck- und/oder Temperaturüberwachung detektiert werden. Ein plötzlicher Abfall des Drucks im Reaktor zeigt bei gasförmigen Alkylenoxiden an, dass das Alkylenoxid eingebaut wird, die Reaktion somit gestartet und das Ende der Startphase erreicht ist. Bei nicht gasförmigen Glycidylethern/-estern oder epoxidfunktionellen Alkoxysilanen wird das Anspringen der Reaktion durch die einsetzende Wärmetönung angezeigt.

Nach der Startphase, also nach Initialisierung der Reaktion, wird je nach angestrebter Molmasse weiteres Alkylenoxid zudosiert. Alternativ kann auch ein beliebiges Gemisch von unterschiedlichen Alkylenoxidverbindungen und Verbindungen der Formeln (IV) und (V) addiert werden, wobei diese auch separat in beliebiger Reihenfolge nacheinander addiert werden können.

Die Umsetzung kann z.B. zwecks Viskositätserniedrigung des Reaktionsgemisches in einem inerten Lösemittel durchgeführt werden. Als inerte Lösungsmittel eignen sich Kohlenwasserstoffe, insbesondere Toluol, Xylol oder Cyclohexan. Dies ist jedoch weniger bevorzugt.

In den erfindungsgemäßen Produkten beträgt das molare Verhältnis der Summe der dosierten Epoxide, inklusive der bereits in der Startphase zugefügten Epoxide, bezogen auf die eingesetzte Startverbindung, insbesondere bezogen auf die Anzahl der OH-Gruppen der eingesetzten Startverbindung, dabei vorzugsweise 1 bis 10⁵ zu 1, insbesondere 1 bis 10⁴ zu 1.

Die Anlagerung der Alkylenoxidverbindungen geschieht vorzugsweise bei einer Temperatur von 60 bis 250 °C, besonders bevorzugt bei einer Temperatur von 90 bis 160 °C. Der Druck, bei dem die Alkoxylierung stattfindet, beträgt vorzugsweise 0,02 bar bis 100 bar, besonders bevorzugt 0,05 bis 20 bar und insbesondere von 0,2 bis 2 bar absolut. Durch die Durchführung der Alkoxylierung bei Unterdruck kann die Reaktion sehr sicher durchgeführt werden. Gegebenenfalls kann die Alkoxylierung in Gegenwart eines Inertgases (z.B. Stickstoff) oder - zur Herstellung von Polyethercarbonaten - in Gegenwart von Kohlendioxid auch bei einem Überdruck von dann vorzugsweise 1 bis 20 bar absolut durchgeführt werden.

Die für die Herstellung von estermodifizierten Polyethern einsetzbaren Lactone oder cyclischen Anhydride können sowohl bereits in der Startphase dem Gemisch aus Starter (A) und Katalysator zugefügt als auch zu einem späteren Zeitpunkt parallel zur Alkylenoxiddosierung zugeführt werden. Die genannten Comonomere können auch jeweils nacheinander alternierend mit Alkylenoxiden in den Reaktor dosiert werden.

Das molare Verhältnis der Alkylenoxidmonomere zu cyclischen Anhydriden ist dabei variabel. Üblicherweise werden mindestens äquimolare Mengen Alkylenoxidmonomere bezogen auf Anhydride eingesetzt. Bevorzugt ist die Verwendung der Alkylenoxide in einem molaren Überschuss, um die vollständige Anhydridumsetzung zu gewährleisten.

Lactone können während der Alkoxylierung wahlweise im stöchiometrischen Unterschuss oder Überschuss bezogen auf die Alkylenoxidmonomere zugefügt werden.

Nach der Monomer-Addition und eventueller Nachreaktion zur Vervollständigung des Monomerumsatzes werden evtl. vorhandene Reste von nicht abreagiertem Monomer und eventuell weiteren leicht flüchtigen Bestandteilen, üblicherweise durch Vakuumdestillation, Gasstrippen oder andere Methoden der Desodorierung entfernt. Die Entfernung leichtflüchtiger Nebenkomponenten kann sowohl diskontinuierlich (batchweise) als auch kontinuierlich erfolgen. Beim erfindungsgemäßen Verfahren auf Basis der DMC-Katalyse kann im Normalfall auf eine Filtration verzichtet werden.

Die Verfahrensschritte können bei identischen oder verschiedenen Temperaturen ausgeführt werden. Die im Reaktor zum Reaktionsstart vorgelegte Mischung aus Startsubstanz, DMC-Katalysator und gegebenenfalls Suspensionsmittel kann vor Beginn der Monomerdosierung gemäß der Lehre von WO 98/52689 durch Strippen vorbehandelt werden. Dabei wird über die Reaktorzuführung ein Inertgas dem Reaktionsgemisch zugemischt und mit Hilfe einer an das Reaktorsystem angeschlossenen Vakuumanlage werden leichter flüchtige Komponenten durch Anlegen eines Unterdrucks aus dem Reaktionsgemisch entfernt. Auf diese einfache Weise können aus dem Reaktionsgemisch Stoffe, die den Katalysator inhibieren können, wie z. B. niedere Alkohole oder Wasser, entfernt werden. Die Zugabe von Inertgas und das gleichzeitige Entfernen der leichter flüchtigen Komponenten kann insbesondere beim Anfahren/Starten der Reaktion von Vorteil sein, da durch die Zugabe der Reaktanden oder durch Nebenreaktionen auch inhibierende Verbindungen in das Reaktionsgemisch gelangen können.

Als Doppelmetallcyanidkatalysatoren (DMC-Katalysatoren) werden im erfindungsgemäßen Verfahren vorzugsweise die in EP 2 093 244 beschriebenen, insbesondere die dort als bevorzugt bzw. besonders bevorzugt beschriebenen DMC-Katalysatoren eingesetzt.

Im Reaktionsgemisch liegt die Katalysatorkonzentration vorzugsweise bei > 0 bis 1.000 wppm (Massenppm), bevorzugt bei > 0 bis 500 wppm, besonders bevorzugt bei 0,1 bis 300 wppm und ganz besonders bevorzugt bei 1 bis 200 wppm. Diese Konzentration ist dabei bezogen auf die Gesamtmasse der entstehenden Alkoxylierungsprodukte.

Vorzugsweise wird der Katalysator nur einmal in den Reaktor dosiert. Die Katalysatormenge ist so einzustellen, dass eine ausreichende katalytische Aktivität für das Verfahren gegeben ist. Der Katalysator kann als Feststoff oder in Form einer Katalysatorsuspension dosiert werden. Wird eine Suspension verwendet, so eignet sich insbesondere der Starter als Suspensionsmittel. Bevorzugt wird aber auf eine Suspendierung verzichtet.

Es kann vorteilhaft sein, wenn der Verfahrensschritt (1) des erfindungsgemäßen Verfahrens so durchgeführt wird, dass die Alkoxylierung in zumindest drei Stufen durchgeführt wird. In Stufe (1a) wird der Starter (A) mit einer kleinen Menge Propylenoxid in Gegenwart des DMC-Katalysators wie zuvor beschrieben zur Reaktion gebracht. Anschließend wird bis zum Erreichen der gewünschten Molmasse weiter Propylenoxid angelagert.

In Stufe (1b) erfolgt die Zugabe von weiterem Propylenoxid und/oder Ethylenoxid und gegebenenfalls einem oder mehrerer der oben genannten Glycidylether der Formel (IV); in Stufe (1c) erfolgt die Zugabe von einer oder mehrerer der Verbindungen der Formel (V) gegebenenfalls unter weiterer Zugabe von Propylenoxid und/oder Ethylenoxid; wobei die Stufen 2 und 3 auch zu einer Stufe zusammengefasst werden können.

Durch die Anlagerung einer Mischung aus Verbindung der Formel (V) und Propylenoxid in Stufe (1c) wird die Alkoxysilanfunktionalität statistisch über die Polymerketten/die Polymerblöcke eingebracht. Die Reihenfolge der Durchführung der Stufen (1b) und (1c) ist beliebig. Vorzugsweise wird nach Stufe (1a) zuerst Stufe (1b) durchgeführt bevor Stufe (1c) durchgeführt wird. Die Stufen (1b) und (1c) können mehrfach nacheinander durchgeführt werden. Bei der mehrmaligen Durchführung der Stufen (1b) und (1c) können die eingesetzten Alkylenoxide sowie der Komponenten der Formeln (IV) und (V) gleich oder verschieden sein. Die zuvor beschriebene detaillierte Verfahrensbeschreibung dient lediglich der besseren Veranschaulichung und repräsentiert eine bevorzugte Dosagereihenfolge der Reaktionsteilnehmer. Hieraus darf kein strickt blockweiser Aufbau der erfindungsgemäßen alkoxysilyl-modifizierten Polymere abgeleitet werden.

Stufe (1a) wird vorzugsweise bei einer Temperatur von 70 - 160 °C, bevorzugt bei 80 - 150 °C, besonders bevorzugt bei einer Temperatur von 100 - 145°C, insbesondere bevorzugt bei 110 - 130 °C durchgeführt. Stufe (1b) wird vorzugsweise bei einer Temperatur von 70 - 160 °C, bevorzugt bei 80 - 150 °C, besonders bevorzugt bei einer Temperatur von 100 - 145°C, insbesondere bevorzugt bei 110 - 130 °C durchgeführt. Stufe (1c) wird vorzugsweise bei einer Temperatur von 70 - 140 °C, bevorzugt bei 75 - 120 °C, besonders bevorzugt bei einer Temperatur von 80 - 110°C durchgeführt. Werden die Stufen (1b) und (1c) zusammengefasst so ist die Reaktionstemperatur, der unter Stufe (1c) bevorzugten Temperatur anzupassen.

Bevorzugt werden im Verfahrensschritt (1) Monomeren zu folgenden Anteilen eingesetzt 10 bis 99,9 Gew.-%, bevorzugt 30 bis 99 Gew.-%, insbesondere bevorzugt 40 bis 98 Gew.-% Propylenoxid, 0 bis 60 Gew.-%, bevorzugt 3 bis 40 Gew.-%, insbesondere bevorzugt 0 bis 20 Gew.-% Ethylenoxid, 0,1 bis 15 Gew.-%, bevorzugt 0,5 bis 10 Gew.-%, insbesondere bevorzugt 1 bis 7 Gew.-% Alkoxysilylgruppen tragendes Epoxid und 0 bis 25 Gew.-%, bevorzugt 0,1 bis 20 Gew.-%, insbesondere bevorzugt 0 bis 10 Gew.-% weitere Monomere, bevorzugt ausgewählt aus von Propylenoxid und Ethylenoxid verschiedenen Alkylenoxiden, wie Butylenoxid, Isobutylenoxid, Styroloxid und/oder weiteren Comonomeren wie ε-Caprolacton, Phthalsäureanhydrid, Glycidylethern wie tert-Butylphenylglycidylether, C₁₂/C₁₄-Fettalkoholglycidylether und 2-Ethylhexylglycidylether bezogen auf das Gesamtgewicht der eingesetzten Monomere.

Die vorrangegangene Ausführungen betrafen die bevorzugte Ausgestaltung von Verfahrensschritt (1). Nachfolgend wird die bevorzugte Ausgestaltung von Verfahrensschritt (2) beschrieben:
Der Verfahrensschritt (2) wird analog zum zuvor beschriebenen Verfahrensschritt (1) durchgeführt, mit dem einzigen Unterschied, dass Starter (B) statt Starter (A) eingesetzt wird.

Bevorzugt werden im Verfahrensschritt (2) Monomeren zu folgenden Anteilen eingesetzt 10 bis 97 Gew.-%, bevorzugt 30 bis 95 Gew.-%, insbesondere bevorzugt 50 bis 90 Gew.-% Propylenoxid, 0 bis 60 Gew.-%, bevorzugt 3 bis 40 Gew.-%, insbesondere bevorzugt 0 bis 20 Gew.-% Ethylenoxid, 1 bis 30 Gew.-%, bevorzugt 3 bis 25 Gew.-%, insbesondere bevorzugt 7 bis 20 Gew.-% Alkoxysilylgruppen tragendes Epoxid und 0 bis 25 Gew.-%, bevorzugt 0,1 bis 20 Gew.-%, insbesondere bevorzugt 0 bis 10 Gew.-% weitere Monomere, bevorzugt ausgewählt aus von Propylenoxid und Ethylenoxid verschiedenen Alkylenoxiden, wie Butylenoxid, Isobutylenoxid, Styroloxid und/oder weiteren Comonomeren wie ε-Caprolacton, Phthalsäureanhydrid, Glycidylethern wie tert-Butylphenylglycidylether, C₁₂/C₁₄-Fettalkoholglycidylether und 2-Ethylhexylglycidylether bezogen auf das Gesamtgewicht der eingesetzten Monomere.

Bevorzugte Ausgestaltung des Verfahrensschrittes (3):
Die in den Verfahrensschritten (1) und (2) erhaltenen OH-funktionellen alkoxysilyl-modifizierten Alkoxylierungsprodukte können im Verfahrensschritt (3), bevorzugt mit Diisocyanaten zu den erfindungsgemäßen alkoxysilyl-modifizierten Polymeren, insbesondere gemäß Formel (I), umgesetzt werden.

In einer besonders bevorzugten Ausführungsform des Verfahrens wird der Verfahrensschritt (3) zweistufig durchgeführt. In der ersten Stufe (3a) wird zunächst das Alkoxylierungsprodukt H-D-H aus Verfahrensschritt (1) dergestalt mit einem Diisocyanat zur Reaktion gebracht, dass sich ein NCO-funktionelles Intermediat bildet, welches anschließend in der zweiten Stufe (3b) mit den monohydroxy-funktionellen Alkoxylierungsprodukt H-M aus Verfahrensschritt (2) zum finalen Polymer umgesetzt wird.

Bevorzugt werden im Verfahrensschritt (3) des erfindungsgemäßen Verfahrens die Diisocyanate im molaren Überschuss gegenüber den OH-Gruppen der Polyether aus Verfahrensschritt (1) H-D-H eingesetzt und zudem die Polyether aus Verfahrensschritt (2) H-M im molaren Überschuß zu den im Reaktionsgemisch vorhandenen Isocyanaten.

In einer besonders bevorzugten Ausführungsform des erfindungsgemäßen Verfahrens werden im Verfahrensschritt (3) die Reaktanden dergestalt eingesetzt, dass äquimolare Verhältnisse von IsocyanatGruppen der eingesetzten Diisocyanate und der Gesamtheit an OH-Gruppen der Polyether aus den Verfahrensschritten (1) und (2) (H-D-H + H-M) zur Reaktion gebracht werden.

In einer weiteren besonders bevorzugten Ausführungsform des erfindungsgemäßen Verfahrens werden im Verfahrensschritt (3b) Mischungen von Verbindungen H-M eingesetzt, bestehend aus Alkoxylierungsprodukten aus Verfahrensschritt (2) und Verbindungen H-M, die keine Alkoxysilylfunktion tragen.

Die in Stufe (3a) gewählten stöchiometrischen Verhältnisse von OH-Gruppe zu Isocyanatgruppen bestimmen die Anzahl der UR-Fragmente im finalen Produkt.

In Stufe (3b) werden die nicht abreagierten Isocyanatgruppen bevorzugt mit Molekülen H-M umgesetzt. Die Umsetzung mit dem Molekül H-M entspricht einem Endcapping-Verfahren. Es wird mit diesem Umsetzungsschritt angestrebt, bevorzugt alle Isocyanatgruppen zur Abreaktion zu bringen.

Der Verfahrensschritt (3) des erfindungsgemäßen Verfahrens zur Herstellung von alkoxysilyl-modifizierten Polymeren gemäß Formel (I) wird bevorzugt mit Isophorondiisocyanat in Gegenwart eines Übergangsmetallkatalysators durchgeführt und ist detailliert in der deutschen Patentanmeldung DE 102012203737 A1 beschrieben. Prinzipiell eignen sich jedoch alle bekannten Diisocyanate als isocyanatgruppenhaltige Verbindungen. Bevorzugt im Sinne der erfindungsgemäßen Lehre sind z.B. aromatische, aliphatische und cycloaliphatische Diisocyanate mit einer zahlenmittleren Molmasse von unter 800 g/mol. So sind beispielsweise vorteilhaft einsetzbare Diisocyanate aus der Reihe 2,4-/2,6-Toluoldiisocyanat (TDI), Methyldiphenyldiisocyanat (MDI), Triisocyanatononan (TIN), Naphthyldiisocyanat (NDI), 4,4'-Diisocyanatodicyclohexylmethan, 3-Isocyanatomethyl-3,3,5-trimethylcyclohexylisocyanat (Isophorondiisocyanat = IPDI), Tetramethylendiisocyanat, Hexamethylendiisocyanat (HDI), 2-Methylpentamethylendiisocyanat, 2,2,4-Trimethyl-hexamethylendiisocyanat (THDI), Dodecamethylendiisocyanat, 1,4-Diisocyanato-Cyclohexan, 4,4'-Diisocyanato-3,3'-dimethyl-dicyclohexylmethan, 4,4'-Diisocyanatodicyclohexylpropan-(2,2), 3-Isocyanatomethyl-1-methyl-1-isocyanatocyclohexan (MCI), 1,3-Diisooctylcyanato-4-methyl-cyclohexan, 1,3-Diisocyanato-2-methylcyclohexan und α,α,α',α'-Tetramethyl-m- oder -p-xylylen-diisocyanat (TMXDI), sowie aus diesen Verbindungen bestehende Gemische zu nennen.

Als bevorzugte Diisocyanate für die Herstellung der alkoxysilyl-modifizierten Polymeren gemäß Formel (I) können Hexamethylendiisocyanat (HDI), Isophorondiisocyanat (IPDI) und/oder 4,4'-Diisocyanatodicyclohexylmethan eingesetzt werden, insbesondere kann bevorzugt Isophorondiisocyanat (IPDI) eingesetzt werden.

Die exakte Struktur von Isophorondiisocyanat ist in Formel (VII) gezeigt.

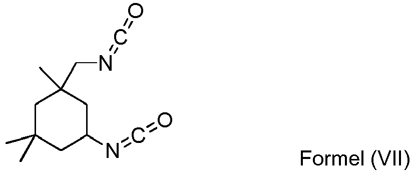

Somit ergibt sich nach der Umsetzung des Isophorondiisocyanats in einer besonders bevorzugten Ausführung des Verfahrensschritts (3) des erfindungsgemäßen Verfahrens das in Formel (VIII) gezeigt Isophoronfragment D^{C} im finalen alkoxysilyl-modifizierten Polymer.

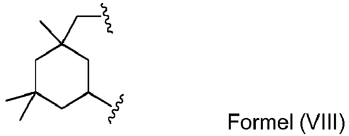

Die Schriften EP 2415797 (US 2012/029090), auf deren Offenbarungsgehalt insbesondere mit Blick auf die dort offenbarten Strukturen und Verfahren hiermit verwiesen sei, und insbesondere die dort offenbarten Verfahren sind hiermit vollumfänglich als Bestandteil dieser Beschreibung zu sehen.

Es kann vorteilhaft sein, wenn der Verfahrensschritt (3) so durchgeführt wird, dass > 40 Gew.-%, bevorzugt > 60 Gew.-% und besonders bevorzugt > 85 Gew.-% der erhaltenen alkoxysilyl-modifizierten Polymeren gemäß Formel (I) keine freie OH-Gruppe mehr aufweist.

Die erfindungsgemäßen alkoxysilyl-modifizierten Polymere können z. B. zur Herstellung von härtbaren Zusammensetzungen verwendet werden.

Erfindungsgemäße härtbare Zusammensetzungen zeichnen sich dadurch aus, dass sie eines oder mehrere der oben beschriebenen erfindungsgemäßen alkoxysilyl-modifizierten Polymere der Formel (I) und zumindest einen Härtungskatalysator aufweisen.

Es kann vorteilhaft sein, wenn die erfindungsgemäßen härtbaren Zusammensetzungen nur erfindungsgemäße alkoxysilyl-modifizierte Polymere der Formel (I) mit i = 2, j = 1 bis 4, u = (j + 1) und v = 0 bis 4 wie oben definiert und keine Alkoxylierungsprodukte der Formel (I) aufweist, bei denen i = 0, j = 1, u = 0 und v = 0 ist.

Es kann aber auch vorteilhaft sein, wenn die erfindungsgemäßen härtbaren Zusammensetzungen neben alkoxysilyl-modifizierten Polymeren der Formel (I) mit i = 1 bis 2, j = 1 bis 4, u = (j + 1) und v = 0 bis 4 wie oben definiert auch solche Alkoxylierungsprodukte der Formel (I) aufweist, bei denen i = 0, j = 1, u = 0 und v = 0 ist. Liegen beide Arten von alkoxysilyl-modifizierten Polymeren bzw. Alkoxylierungsprodukten in den erfindungsgemäßen härtbaren Zusammensetzungen vor, so beträgt das Massenverhältnis (Verhältnis der Massenteile) von alkoxysilyl-modifizierten Polymeren der Formel (I) mit i = 1 bis 2, j = 1 bis 4, u = (j + 1) und v = 0 bis 4 zu Alkoxylierungsprodukten der Formel (I), bei denen i = 0, j = 1, u = 0 und v = 0 ist, von 100:>0 bis 10:90, bevorzugt zwischen 95:5 und 15:85 und besonders bevorzugt zwischen 80:20 und 30:70. Vorzugsweise weisen auch die Alkoxylierungsprodukte der Formel (I), bei denen i = 0, j = 1, u = 0 und v = 0 ist, als Alkoxysilygruppen überwiegend oder ausschließlich, vorzugsweise ausschließlich Ethoxysilylgruppen, bevorzugt Triethoxysilylgruppen auf.

Der Anteil der erfindungsgemäßen alkoxysilyl-modifizierten Polymere an den erfindungsgemäßen härtbaren Zusammensetzungen beträgt vorzugsweise von 10 bis kleiner 90 Gew.-%, bevorzugt von 15 bis 70 Gew.-%, und besonders bevorzugt von 20 Gew.-% bis 65 Gew.-%.

Als Härtungs-Katalysatoren (für die Vernetzung oder Polymerisation der erfindungsgemäßen Zusammensetzung oder deren chemische Fixierung auf Partikel- oder makroskopischen Oberflächen) können die üblicherweise zur Hydrolyse und Kondensation von Alkoxysilanen eingesetzten Katalysatoren eingesetzt werden. Vorzugsweise werden als Härtungs-Katalysatoren organischen Zinnverbindungen, wie z.B. Dibutylzinndilaurat, Dibutylzinndiacetylacetonat, Dibutylzinndiacetat, Dibutylzinndioctoat, oder Dioctylzinndilaurat, Dioctylzinndiacetylacetonat, Dioctylzinndiketanoat, Dioctylstannoxan, Dioctylzinndicarboxylat, Dioxtylzinnoxid, bevorzugt Dioctylzinndiacetylacetonat, Dioctylzinndilaurat, Dioctylzinndiketanoat, Dioctylstannoxan, Dioctylzinndicarboxylat, Dioctylzinnoxid, besonders bevorzugt Dioctylzinndiacetylacetonat und Dioctylzinndilaurat eingesetzt. Des Weiteren können auch Zinksalze, wie Zinkoctoat, Zinkacetylacetonat und Zink-2-ethylcaproat, oder Tetraalkylammoniumverbindungen, wie N,N,N-Trimethyl-N-2-hydroxypropylammoniumhydroxid, N,N,N-Trimethyl-N-2-hydroxypropylammonium-2-ethylhexanoat oder Cholin-2-ethylhexanoat verwendet werden. Bevorzugt ist die Verwendung von Zinkoctoat (Zink-2-ethylhexanoat) und der Tetraalkylammoniumverbindungen, besonders bevorzugt diejenige von Zinkoctoat. Des Weiteren können auch Wismutkatalysatoren, z.B. Borchi®-Katalysatoren, Titanate, z.B. Titan(IV)isopropylat, Eisen(III)-Verbindungen, z.B. Eisen(III)-acetylacetonat, Aluminiumverbindungen, wie Aluminiumtriisopropylat, Aluminiumtri-sec-butylat und andere Alkoholate sowie Aluminiumacetylacetonat, Calciumverbindungen, wie Calciumdinatriumethylendiamintetraacetat oder Calciumdiacetylacetonat, oder auch Amine, z.B. Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenylamin, N-Ethylmorpholin etc., eingesetzt werden. Auch organische oder anorganische Brönstedsäuren wie Essigsäure, Trifluoressigsäure, Methansulfonsäure, p-Toluolsulfonsäure oder Benzoylchlorid, Salzsäure, Phoshorsäure deren Mono- und/oder Diester, wie z.B. Butylphosphat, (Iso-)Propylphosphat, Dibutylphosphat etc., sind als Katalysatoren geeignet. Selbstverständlich können auch Kombinationen mehrerer Katalysatoren eingesetzt werden.

Der Anteil der Härtungs-Katalysatoren an der erfindungsgemäßen Zusammensetzung beträgt vorzugsweise von 0,1 Gew.-% bis 5 Gew.-%, bevorzugt von 0,15 bis 2 Gew.-% und besonders bevorzugt von 0,2 bis 0,75 Gew.-%, bezogen auf die Gesamtzusammensetzung.

Die erfindungsgemäße Zusammensetzung kann weitere Zusatzstoffe ausgewählt aus der Gruppe der Weichmacher, Füllstoffe, Lösungsmittel, Haftvermittler, Additive zur Anpassung des Fließverhaltens, sogenannten Rheologieadditiven und Trocknungsmittel, insbesondere chemische Feuchtigkeits-Trocknungsmittel enthalten.

Vorzugsweise enthält die erfindungsgemäße Zusammensetzung einen oder mehrere Haftvermittler und/oder ein oder mehrere Trocknungsmittel, insbesondere chemische Feuchtigkeits-Trocknungsmittel.

Als Haftvermittler können die aus dem Stand der Technik bekannten Haftvermittler, insbesondere Aminosilane in der erfindungsgemäßen Zusammensetzung enthalten sein. Als Haftvermittler können vorzugsweise Alkoxysilyl-Gruppen tragende Verbindungen die zusätzlich über primäre oder sekundäre Amingruppen, Vinylgruppen, Thiolgruppen, Arylgruppen oder alternativ Oxirangruppen verfügen, wie 3-Aminopropyltrimethoxysilan (Dynasylan® AMMO (Evonik), N-(2-Aminoethyl)-3-aminopropyltrimethoxysilan (Dynasylan® DAMO (Evonik)), N-(n-Butyl)aminopropyltrimethoxysilan (Dynasylan® 1189 (Evonik)), 3-Mercaptopropyltrimethoxysilan (Dynasylan® MTMO, Evonik), 3-Glycidyloxy-propyltriethoxysilan (Dynasylan® GLYEO, Evonik) 3-Glycidyloxypropyltrimethoxysilan (Dynasylan® GLYMO, Evonik), Phenyltrimethoxysilan (Dynasylan® 9165 oder Dynasylan® 9265, Evonik) oder oligomere Amino/Alkyl-Alkoxysilane wie z.B. Dynasylan® 1146 (Evonik), jeweils alleine oder in Mischung eingesetzt werden. Bevorzugte vorhandene Haftvermittler sind z. B. 3-Aminopropyltriethoxysilan (Geniosil® GF 93 (Wacker), Dynasylan® AMEO (Evonik®)) und/oder (3-Aminopropy)methyldiethoxysilan (Dynasylan® 1505 (Evonik®)), 3-Aminopropyltrimethoxysilan (Dynasylan® AMMO (Evonik), N-(2-Aminoethyl)-3-aminopropyltrimethoxysilan (Dynasylan® DAMO (Evonik)), Dynasylan® 1146 (Evonik), besonders bevorzugt 3-Aminopropyltriethoxysilan, 3-Aminopropyltrimethoxysilan, N-(2-Aminoethyl)-3-aminopropyltrimethoxysilan, Dynasylan® 1146, und insbesondere bevorzugt sind 3-Aminopropyltrimethoxysilan, 3-Aminopropyltriethoxysilan, N-(2-Aminoethyl)-3-aminopropyltrimethoxysilan und Dynasylan® 1146.
Der Anteil der Haftvermittler an der erfindungsgemäßen Zusammensetzung beträgt vorzugsweise von größer 0 bis 5 Gew.-%, bevorzugt von 0,5 bis 4 Gew.-% und besonders bevorzugt von 1 bis 2,5 Gew.-% bezogen auf die Gesamtzusammensetzung.

Es kann vorteilhaft sein, wenn die erfindungsgemäße Zusammensetzung ein Trocknungsmittel aufweist, z. B. zum Binden von durch Formulierungskomponenten eingetragenen, oder nachträglich durch den Abfüllprozess oder die Lagerung eingebrachten Wassers oder Feuchtigkeit. Als Trocknungsmittel können in den erfindungsgemäßen Zusammensetzungen prinzipiell alle aus dem Stand der Technik bekannten Trocknungsmittel eingesetzt werden. Als chemische Trocknungsmittel kann z.B. Vinyltrimethoxysilan (Dynasylan® VTMO , Evonik oder Geniosil® XL 10, Wacker AG), Vinyltriethoxysilan (Dynasylan® VTEO, Evonik oder Geniosil® GF 56, Wacker), Vinyltriacetoxysilan (Geniosil® GF 62, Wacker), N-Trimethoxysilylmethyl-O-methyl-carbamat (Geniosil® XL 63, Wacker), N-Dimethoxy(methyl)silylmethyl-O-methyl-carbamat, N-Methyl[3-(Trimethoxysilyl)-propyl]carbamat (Geniosil® GF 60, Wacker), Vinyldimethoxymethylsilan (Geniosil® XL 12, Wacker), Vinyltris(2-methoxyethoxy)silan (Geniosil® GF 58, Wacker) Bis(3-triethoxysilylpropyl)amin (Dynasylan® 1122, Evonik), Bis(3-trimethoxysilylpropyl)amin (Dynasylan® 1124), N-Dimethoxy(methyl)silylmethyl-O-methyl-carbamat (Geniosil® XL 65, Wacker) oder oligomere Vinylsilane wie beispielsweise Dynasylan® 6490 und Dynasylan® 6498 (beide zu beziehen von Evonik) alleine oder in Mischung verwandt werden. Vorzugsweise werden Vinyltrimethoxysilan (Dynasylan® VTMO, Evonik oder Geniosil® XL 10, Wacker AG), Vinyltriethoxysilan (Dynasylan® VTEO, Evonik oder Geniosil® GF 56, Wacker) als Trocknungsmittel eingesetzt. Als chemisches Feuchtigkeits-Trocknungsmittel enthält die erfindungsgemäße Zusammensetzung bevorzugt Vinyltrimethoxysilan (Dynasylan® VTMO, Evonik oder Geniosil® XL 10, Wacker AG). Ferner kann zusätzlich oder alternativ zur chemischen Trocknung ein physikalisches Trocknungsmittel, wie z.B. Zeolithe, Molsiebe, wasserfreies Natriumsulfat oder wasserfreies Magnesiumsulfat verwendet werden.

Der Anteil der Trocknungsmittel an der erfindungsgemäßen Zusammensetzung beträgt vorzugsweise von größer 0 bis 5 Gew.-%, bevorzugt von 0,2 bis 3 Gew.-% bezogen auf die Gesamtzusammensetzung.

Die erfindungsgemäße Zusammensetzung kann einen oder mehrere Zusatzstoffe ausgewählt aus der Gruppe der Weichmacher, Füllstoffe, Lösungsmittel und Additive zur Anpassung des Fließverhaltens (Rheologieadditive) enthalten.

Die Weichmacher können z. B. ausgewählt werden aus der Gruppe der Phthalate, der Polyester, Alkylsulfonsäureester des Phenols, Cyclohexandicarbonsäureester oder auch der Polyether. Als Weichmacher werden nur solche Verbindungen eingesetzt, die von den erfindungsgemäßen Alkoxylierungsprodukten der Formel (I) verschieden sind.

Wenn Weichmacher in der erfindungsgemäßen Zusammensetzung vorhanden sind, beträgt der Anteil der Weichmacher an der erfindungsgemäßen Zusammensetzung vorzugsweise von größer 0 Gew.-% bis 90 Gew.-%, bevorzugt 2 Gew.-% bis 70 Gew.-%, besonders bevorzugt 5 Gew.-% bis 50 Gew.-% bezogen auf die Gesamtzusammensetzung.

Als Füllstoffe können z. B. gefällte oder gemahlene Kreide, anorganische Carbonate im allgemeinen, gefällte oder gemahlene Silikate, gefällte oder pyrogene Kieselsäuren, Glaspulvern, Glashohlkugeln (sog. Bubbles), Metalloxiden, wie z.B. TiO₂, Al₂O₃, natürliche oder gefällte Bariumsulfate verstärkende Fasern, wie Glasfasern oder Kohlefasern, lang oder kurzfaserige Wollastonite, Kork, Ruß oder Graphit eingesetzt werden. Vorteilhaft können hydrophobierte Füllstoffe eingesetzt werden, da diese Produkte einen geringeren Wassereintrag aufweisen und die Lagerstabilität der Formulierungen verbessern.

Wenn Füllstoffe in der erfindungsgemäßen Zusammensetzung vorhanden sind, beträgt der Anteil der Füllstoffe an der erfindungsgemäßen Zusammensetzung vorzugsweise von 1 bis 70 Gew.-% bezogen auf die Gesamtzusammensetzung, wobei für die hier genannten Füllstoffe mit Ausnahme der pyrogenen Kieselsäuren Konzentrationen von 30 bis 65 Gew.-% besonders bevorzugt sind. Werden pyrogene Kieselsäuren verwendet ist ein Anteil der pyrogenen Kieselsäuren von 2 bis 20 Gew.-% besonders bevorzugt.

Als Rheologieadditive, vorzugsweise zusätzlich zum Füllstoff enthalten, können aus der Gruppe der Amidwachse, zu beziehen z.B. von Cray Valley unter dem Markennamen Crayvallac®, gehärtete Pflanzenöle und Fette, pyrogene Kieselsäuren, wie z.B. Aerosil® R202 oder R805 (beide zu beziehen von Evonik) oder Cab-O-Sil® TS 720 oder TS 620 oder TS 630 (vertrieben von Cabot) ausgewählt werden. Werden pyrogene Kieselsäuren bereits als Füllstoff verwendet, kann die Zugabe eines Rheologieadditivs entfallen.

Wenn Rheologieadditive in der erfindungsgemäßen Zusammensetzung vorhanden sind, beträgt der Anteil der Rheologieadditive an der erfindungsgemäßen Zusammensetzung je nach gewünschtem Fließverhalten vorzugsweise von größer 0 Gew.-% bis 10 Gew.-%, bevorzugt von 2 Gew.-% bis 6 Gew.-% bezogen auf die Gesamtzusammensetzung.

Die erfindungsgemäßen Zusammensetzungen können Lösungsmittel enthalten. Die Lösungsmittel können dabei beispielsweise der Erniedrigung der Viskosität der unvernetzten Mischungen dienen oder das Aufziehen auf die Oberfläche begünstigen. Als Lösungsmittel kommen prinzipiell sämtliche Lösungsmittel sowie Lösemittelmischungen in Betracht. Bevorzugte Beispiele für solche Lösungsmittel sind Ether wie z.B. t-Butyl-methylether, Ester, wie z.B. Ethylacetat oder Butylacetat oder Diethylcarbonat sowie Alkohole, wie z.B. Methanol, Ethanol sowie die verschiedenen Regioisomere des Propanols und Butanols oder auch anwendungsspezifisch ausgewählte Glykoltypen. Weiterhin können aromatische und/oder aliphatische Lösemittel wie auch halogenierte Lösemittel, wie z.B. Dichlormethan, Chloroform, Tetrachlormethan, Fluorkohlenwasserstoffe (FREON) u.a.m zum Einsatz kommen, aber auch anorganische Lösemittel wie beispielsweise Wasser, CS₂, überkritisches CO₂ u.a.m..

Bei Bedarf können die erfindungsgemäßen Zusammensetzungen außerdem eine oder mehrere Substanzen, ausgewählt aus der Gruppe umfassend Co-Vernetzer, Flammschutzmittel, Entlüfter, antimikrobielle und konservierende Stoffe, Farbstoffe, Färbemittel und Pigmente, Frostschutzmittel, Fungizide und/oder Reaktivverdünner sowie Komplexbildner, Sprühhilfsmittel, Netzmittel, Duftstoffe, Lichtschutzmittel, Radikalfänger, UV-Absorber und Stabilisatoren, insbesondere Stabilisatoren gegen thermische und/oder chemische Belastungen und/oder Belastungen durch ultraviolettes und sichtbares Licht, enthalten.

Als UV-Stabilisatoren können z. B. bekannte Produkte auf Basis gehinderter phenolischer Systeme eingesetzt werden. Als Licht-Stabilisatoren können z. B. sogenannte HALS-Amine eingesetzt werden. Als Stabilisatoren können z. B. die dem Fachmann bekannten Produkte oder Produktkombinationen aus z.B. Tinuvin®-Stabilisatoren (BASF), wie z. B. Tinuvin®-Stabilisatoren (BASF a), beispielsweise Tinuvin® 1130, Tinuvin® 292 oder auch Tinuvin® 400, bevorzugt Tinuvin® 1130 in Kombination mit Tinuvin® 292 eingesetzt werden. Ihre Einsatzmenge richtet sich nach dem Grad der erforderlichen Stabilisierung.

Zusätzlich können den härtbaren Zusammensetzungen Covernetzer zur Steigerung von mechanischer Härte und Reduktion der Fließneigung beigemischt werden. Solche Covernetzer sind typischerweise Substanzen die in der Lage sind 3, 4 oder mehr vernetzungsfähige Gruppen zur Verfügung zu stellen. Beispiele im Kontext dieser Erfindung sind 3-Aminopropyltriethoxysilan, Tetramethoxysilan oder Tetraethoxysilan.

Bevorzugte erfindungsgemäße härtbare Zusammensetzungen weisen zumindest ein Alkoxylierungsprodukt der Formel (I) und einen Weichmacher, einen Füllstoff, einen Haftvermittler, ein Trocknungsmittel oder einen (Härtungs-)Katalysator auf.

Besonders bevorzugte erfindungsgemäße Zusammensetzungen weisen von 10 bis 90 Gew.-% oder kleiner 80 Gew.-% bezogen auf die Gesamtzusammensetzung an alkoxysilyl-modifizierten Polymeren der Formel (I), das vorzugsweise im Mittel zwischen 2,0 und 8,0, Ethoxysilyl-Funktionen pro alkoxysilyl-modifiziertem Polymer der Formel (I) aufweist, von 0,3 Gew.-% bis 5,0 Gew.-%, bevorzugt von 0,5 Gew.-% bis 4,0 Gew.-%, und besonders bevorzugt von 1,0 Gew.-% bis 2,5 Gew.-% bezogen auf die Gesamtzusammensetzung an Haftvermittler, weniger als 30 Gew.-% bezogen auf die Gesamtzusammensetzung an Weichmacher, von 1 bis 70 Gew.-% bezogen auf die Gesamtzusammensetzung an Füllstoffen, von 0,2 bis 3,0 Gew.-% bezogen auf die Gesamtzusammensetzung an chemischen Feuchtigkeits-Trocknungsmitteln und von 0,1 Gew.-% bis 5,00 Gew.-%, bevorzugt 0,2 bis 3,00 Gew.-% bezogen auf die Gesamtzusammensetzung an Härtungs-Katalysatoren, auf. Bei ganz besonders bevorzugten Zusammensetzungen sind die genannten Anteile der Formulierungsbestandteile so gewählt, dass sich die Gesamtsumme der Anteile auf 100 Gew.-% summiert.

Die erfindungsgemäßen Zusammensetzungen können z. B. Dicht- oder Klebstoff sein oder zur Herstellung eines Dicht- oder Klebstoffs verwendet werden.

Die erfindungsgemäße Zusammensetzung, insbesondere die so erhaltenen erfindungsgemäßen Zusammensetzung härtet in, zu bisher kommerziell verfügbaren und technisch eingesetzten Produkten vergleichbaren Zeiträumen aus, und vernetzt, so sie in dickeren Schichten appliziert wurde, auch sehr gut in die Tiefe. Die Flankenhaftung und Anbindung an verschiedene Substrate, wie beispielsweise Stahl, Aluminium, verschiedene Kunststoffe und mineralische Untergründe wie beispielsweise Stein, Beton und Mörtel, ist besonders gut.

Die erfindungsgemäßen Zusammensetzungen können insbesondere zur Verstärkung, Nivellierung, Modifikation, Verklebung, Abdichtung und/oder Beschichtung von Substraten verwendet werden. Geeignete Substrate sind z. B. partikuläre oder flächige Substrate, in der Bauindustrie oder im Fahrzeugbau, Konstruktionselemente, Bauteile, Metalle, insbesondere Konstruktionswerkstoffe wie Eisen, Stahl, Edelstahl und Gusseisen, keramische Materialien, insbesondere basierend auf festen Metall- oder Nichtmetalloxiden oder Carbiden, Aluminiumoxid, Magnesiumoxid oder Calciumoxid, mineralische oder organische Substrate, insbesondere Kork und/oder Holz, mineralische Untergründe, Span- und Faserplatten aus Holz oder Kork, Verbundwerkstoffe wie beispielsweise Holzverbundstoffe wie MDF-Platten (mitteldichte Faserplatten), WPC-Artikel (Wood Plastic Composites), Spanplatten, Korkartikel, laminierte Artikel, Keramiken, aber auch Naturfasern und Kunstfasern (aufweisende Substrate) oder Mischungen unterschiedlicher Substrate. Besonders bevorzugt werden die erfindungsgemäßen Zusammensetzungen zur Abdichtung und/oder Beschichtung von partikulären oder flächigen Substraten, in der Bauindustrie oder im Fahrzeugbau, zur Abdichtung und Verklebung von Konstruktionselementen und Bauteilen, sowie zur Beschichtung von porösen oder nicht-porösen, partikulären oder flächigen Substraten, zur Beschichtung und Modifikation von Oberflächen und zur Anwendungen auf Metallen, insbesondere auf Konstruktionswerkstoffe wie Eisen, Stahl, Edelstahl und Gusseisen, zur Anwendung auf keramischen Materialien, insbesondere basierend auf festen Metall- oder Nichtmetalloxiden oder Carbiden, Aluminiumoxid, Magnesiumoxid oder Calciumoxid, auf mineralischen Substraten oder organische Substraten, insbesondere auf Kork und/oder Holz, zur Bindung, Verstärkung und Nivellierung von unebenen, porösen oder brüchigen Substraten, wie z.B. mineralischen Untergründen, Span- und Faserplatten aus Holz oder Kork, Verbundwerkstoffe wie beispielsweise Holzverbundstoffe wie MDF-Platten (mitteldichte Faserplatten), WPC-Artikel (Wood Plastic Composites), Spanplatten, Korkartikel, laminierte Artikel, Keramiken, aber auch Naturfasern und Kunstfasern, oder Mischungen unterschiedlicher Substrate, verwendet.

Durch dieses breite Haftungsspektrum sind sie auch für die Verklebung von Materialkombinationen aus den genannten Substraten geeignet. Hierbei ist es nicht ausschlaggebend, ob die Oberflächen glatt oder angeraut oder porös sind. Angeraute oder poröse Oberflächen sind aufgrund der größeren Kontaktfläche zum Klebstoff zu bevorzugen.

Die erfindungsgemäßen Zusammensetzungen werden bevorzugt in einem Temperaturbereich von 10°C-40°C appliziert und härten auch unter diesen Bedingungen gut aus. Aufgrund des feuchtigkeitsabhängigen Härtungsmechanismus ist eine relative Luftfeuchtigkeit von min. 35% bis max. 75% für eine gute Härtung besonders bevorzugt. Die ausgehärtete Verklebung (Zusammensetzung) ist in einem Temperaturbereich von -10°C bis 80°C einsetzbar. Die mit den erfindungsgemäßen Zusammensetzungen hergestellten Verklebungen sind beständig gegen Wasser bei T<60°C und gegen nicht quellende Lösungsmittel. Nicht beständig ist die Verklebung gegen die Formulierung quellende Lösungsmittel, wie beispielsweise Methanol, Ethanol, Toluol, Tetrahydrofuran, Aceton, Isopropanol.

Die Quellbarkeit durch Ethanol, welches bei der Vernetzungsreaktion der Alkoxylierungsprodukte entsteht, ist eine grundlegende Voraussetzung, da das entstehende Ethanol auch innerhalb großer Flächenverklebungen die Härtung nicht behindert. Es wird zu den Rändern hin abtransportiert und dampft dort ab. Somit wird eine zügige Härtung der Flächenverklebung mit den erfindungsgemäßen Formulierungen gewährleistet.

Die Verwendung der erfindungsgemäßen härtbaren Zusammensetzungen, wie zuvor beschrieben, für Kleb- und/oder Dichtstoffanwendungen,
die Verwendung der erfindungsgemäßen alkoxysilyl-modifizierten Polymere, wie zuvor beschrieben, zur Verstärkung, Nivellierung, Modifikation, Verklebung, Abdichtung und/oder Beschichtung von Substraten, sowie die Verwendung der erfindungsgemäßen alkoxysilyl-modifizierten Polymere, wie zuvor beschrieben, in härtbaren Zusammensetzungen, zur Verbesserung des Weiterreißwiderstandes,
sind weitere Gegenstände dieser Erfindung

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Allgemeines:

Die Viskosität wurde Scherraten-abhängig bei 25°C mit dem Rheometer MCR301 von Anton Paar in einer Platte-Platte-Anordnung mit einer Spaltbreite von 1 mm bestimmt. Der Durchmesser der oberen Platte betrug 40 mm. Die Viskosität bei einer Scherrate von 10 s⁻¹ wurde abgelesen und ist in den Tabellen 1 und 2 aufgeführt.

### Beispiele 1 bis 6: Synthese von PPG-basierten alkoxysilyl-modifizierten Polyethern gemäß Verfahrensschritt (1) des erfindungsgemäßen Verfahrens:

In einem 5 Liter Autoklaven wurde die entsprechende Menge PPG 2000 (je nach Beispiel 600-900 g) vorgelegt und mit 100 ppm (bezogen auf den Gesamtansatz) eines Zinkhexacyanocobaltat-Doppelmetallcyanid-Katalysators versetzt. Zum Inertisieren wurde der Reaktor bis 3 bar mit Stickstoff beaufschlagt und anschließend auf Normaldruck entspannt. Der Vorgang wurde noch zweimal wiederholt. Unter Rühren wurde der Reaktorinhalt auf 130 °C erhitzt und auf ca. 20 mbar evakuiert, um leichtflüchtige Komponenten zu entfernen. Nach 30 min wurden zur Aktivierung des Katalysators 80 g Propylenoxid in den evakuierten Reaktor dosiert. Der Innendruck stieg zunächst auf ca. 0,8 bar an. Nach wenigen Minuten sprang die Reaktion an, was sich durch einen spontanen Abfall im Reaktordruck bemerkbar machte. Nun wurden die nötige(n) Menge(n) Propylenoxid und/oder Ethylenoxid zudosiert, um den in Tabelle 1 angegebenen Aufbau des 1. Blocks zu realisieren. Es schloss sich eine einstündige Nachreaktion an, während derer die Temperatur auf 95°C abgesenkt wurde. Bei dieser Temperatur wurde nun ein Gemisch aus Dynasylan® GLYEO (3-Glycidyloxy-propyltriethoxysilan, Firma Evonik) und Propylenoxid kontinuierlich so zudosiert, dass sich der in Tabelle 1 angegebene Aufbau des 2. Blocks ergibt und die Temperatur konstant blieb. Nach einer erneuten einstündigen Nachreaktion wurde durch Anlegen eines Drucks (P < 100 mbar) desodoriert, um Reste an nicht umgesetztem Alkylenoxid zu entfernen. Anschließend wurden 500 ppm Irganox® 1135 (Firma BASF) für 15 Minuten eingerührt. Es wurden durchweg farblose, homogene Produkte erhalten. Die jeweiligen Molverhältnisse der eingesetzten Reaktanden bezogen auf 1 mol Starter sind Tabelle 1 zu entnehmen.

### Beispiele 7 und 8: Synthese von BPG-basierten alkoxysilyl-modifizierten Polyethern gemäß Verfahrensschritt (2) des erfindungsgemäßen Verfahrens:

In einem 5 Liter Autoklaven wurde die entsprechende Menge BPG 400 (je nach Beispiel 250-500 g) vorgelegt und mit 150 ppm (bezogen auf den Gesamtansatz) eines Zinkhexacyanocobaltat-Doppelmetallcyanid-Katalysators versetzt. Zum Inertisieren wurde der Reaktor bis 3 bar mit Stickstoff beaufschlagt und anschließend auf Normaldruck entspannt. Der Vorgang wurde noch zweimal wiederholt. Unter Rühren wurde der Reaktorinhalt auf 130 °C erhitzt und auf ca. 20 mbar evakuiert, um leichtflüchtige Komponenten zu entfernen. Nach 30 min wurden zur Aktivierung des Katalysators 80 g Propylenoxid in den evakuierten Reaktor dosiert. Der Innendruck stieg zunächst auf ca. 0,8 bar an. Nach wenigen Minuten sprang die Reaktion an, was sich durch einen spontanen Abfall im Reaktordruck bemerkbar machte. Nun wurden die nötige Menge Propylenoxid zudosiert, um den in Tabelle 1 angegebenen Aufbau des 1. Blocks zu realisieren. Es schloss sich eine einstündige Nachreaktion an, während derer die Temperatur auf 95°C abgesenkt wurde. Bei dieser Temperatur wurde nun ein Gemisch aus Dynasylan® GLYEO (3-Glycidyloxy-propyltriethoxysilan, Firma Evonik) und Propylenoxid kontinuierlich so zudosiert, dass sich der in Tabelle 1 angegebene Aufbau des 2. Blocks ergibt und die Temperatur konstant blieb. Nach einer erneuten einstündigen Nachreaktion wurde durch Anlegen eines Drucks (P < 100 mbar) desodoriert, um Reste an nicht umgesetztem Alkylenoxid zu entfernen. Anschließend wurden 500 ppm Irganox® 1135 (Firma BASF) für 15 Minuten eingerührt. Es wurden durchweg farblose, homogene niedrigviskose Produkte erhalten. Die jeweiligen Molverhältnisse der eingesetzten Reaktanden bezogen auf 1 mol Starter sind gemeinsam mit den Viskositäten Tabelle 1 zu entnehmen.

**Tabelle 1: Aufbau und Viskosität der Alkoxysilylpolyether der Beispiele 1-8**

| Aufbau | | 1.Block | 2. Block | | Viskosität |
|---|---|---|---|---|---|
| Bsp. | Starter | n | n_{GLYEO} | n_{PO} | [Pa · s] |
| | | [mol] | [mol] | [mol] | (bei 25°C) |
| 1 | PPG 2000* | 70 PO | 0 | 103 | 11,6 |
| 2 | PPG 2000* | 70 PO | 1 | 102 | 11,3 |
| 3 | PPG 2000* | 70 PO | 2 | 101 | 10,5 |
| 4 | PPG 2000* | 70 PO | 2,5 | 100,5 | 9,5 |
| 5 | PPG 2000* | 15 PO + 20 EO/35 PO | 2 | 101 | 11,1 |
| 6 | Desmophen C 2100+ | 87 PO | 1 | 102 | 65,8 |
| 7 | BPG 400** | 11 | 1,5 | 20 | 0,27 |
| 8 | BPG 400** | 15 | 1,5 | 62 | 0,89 |

| | | | | | |
|---|---|---|---|---|---|
| * Polypropylenglykol-Polyether mit einem mittleren Molekulargewicht von 2000 g/mol ** Butanol-gestartetes Polypropylenglykol mit einer mittleren Molmasse von 400 g/mol ⁺ terminal dihydroxy-funktionelles Polycarbonat mit einem mittleren Molekulargewicht von 2000 g/mol (erhältlich bei Bayer Material Science) | | | | | |

### Synthese von alkoxysilyl-modifizierten Polymeren gemäß Verfahrensschritt (3) des erfindungsgemäßen Verfahrens (Endverkappung nach DE 102012203737A1):

Die in den Beispielen 1-6 hergestellten Alkoxylierungsprodukte wurden im Anschluß mit IPDI (Isophorondiisocyanat) und den hergestellten Alkoxylierungsprodukten aus den Beispielen 7 und 8 nach dem erfindungsgemäßen Verfahrensschritt (3) umgesetzt.

### Beispiel 9 (Vergleichsbeispiel):

1082 g Alkoxysilylpolyether aus Beispiel 1 wurden vorgelegt und auf 70 °C erhitzt. Anschließend wurden 36,9 g IPDI zugesetzt, fünf Minuten gerührt und 0,09 g TIB Kat 216 (Dioctylzinndilaurat) zugesetzt. Es wurde 30 min lang gerührt und 452,9 g eines Alkoxysilylpolyether aus Beispiel 7 zugesetzt. Anschließend wurde weitere 5 h lang gerührt.

### Beispiel 10:

2389,9 g Alkoxysilylpolyether aus Beispiel 2 wurden vorgelegt und auf 70 °C erhitzt. Anschließend wurden 80,5 g IPDI zugesetzt, fünf Minuten gerührt und 0,20 g TIB Kat 216 (Dioctylzinndilaurat) zugesetzt. Es wurde 30 min lang gerührt und 987,9 g eines Alkoxysilylpolyether aus Beispiel 7 zugesetzt. Anschließend wurde weitere 5 h lang gerührt.

### Beispiel 11:

2293,9 g Alkoxysilylpolyether aus Beispiel 3 wurden vorgelegt und auf 70 °C erhitzt. Anschließend wurden 76,28 g IPDI zugesetzt, fünf Minuten gerührt und 0,20g TIB Kat 216 (Dioctylzinndilaurat) zugesetzt. Es wurde 30 min lang gerührt und 935,9 g eines Alkoxysilylpolyether aus Beispiel 7 zugesetzt. Anschließend wurde weitere 5 h lang gerührt.

### Beispiel 12:

993,6 g Alkoxysilylpolyether aus Beispiel 4 wurden vorgelegt und auf 70 °C erhitzt. Anschließend wurden 32,4 g IPDI zugesetzt, fünf Minuten gerührt und 0,09 g TIB Kat 216 (Dioctylzinndilaurat) zugesetzt. Es wurde 30 min lang gerührt und 397,9 g eines Alkoxysilylpolyether aus Beispiel 7 zugesetzt. Anschließend wurde weitere 5 h lang gerührt.

### Beispiel 13 (Vergleichsbeispiel):

1284,8 g Alkoxysilylpolyether aus Beispiel 4 wurden vorgelegt und auf 70 °C erhitzt. Anschließend wurden 42,0 g IPDI zugesetzt, fünf Minuten gerührt und 0,08 g TIB Kat 216 (Dioctylzinndilaurat) zugesetzt. Es wurde 30 min lang gerührt und 79,6 g eines Polyether der allgemeinen Formel C₄H₉O[CH₂CH(CH₃)O]_{5,6}H zugesetzt. Anschließend wurde weitere 5 h lang gerührt.

### Beispiel 14:

643 g Alkoxysilylpolyether aus Beispiel 5 wurden vorgelegt und auf 70 °C erhitzt. Anschließend wurden 26 g IPDI zugesetzt, fünf Minuten gerührt und 0,06 g TIB Kat 216 (Dioctylzinndilaurat) zugesetzt. Es wurde 30 min lang gerührt und 331 g eines Alkoxysilylpolyether aus Beispiel 7 zugesetzt. Anschließend wurde weitere 5 h lang gerührt.

### Beispiel 15:

662 g Alkoxysilylpolyether aus Beispiel 6 wurden vorgelegt und auf 70 °C erhitzt. Anschließend wurden 24,4 g IPDI zugesetzt, fünf Minuten gerührt und 0,06 g TIB Kat 216 (Dioctylzinndilaurat) zugesetzt. Es wurde 30 min lang gerührt und 314 g eines Alkoxysilylpolyether aus Beispiel 7 zugesetzt. Anschließend wurde weitere 5 h lang gerührt.

### Beispiel 16:

482 g Alkoxysilylpolyether aus Beispiel 2 wurden vorgelegt und auf 70 °C erhitzt. Anschließend wurden 19,2 g IPDI zugesetzt, fünf Minuten gerührt und 0,06 g TIB Kat 216 (Dioctylzinndilaurat) zugesetzt. Es wurde 30 min lang gerührt und 499 g eines Alkoxysilylpolyether aus Beispiel 8 zugesetzt. Anschließend wurde weitere 5 h lang gerührt.

### Anwendungstechnische Evaluierung:

### Ansetzen der raumtemperaturapplizierbaren Kleb-/Dichtstoff-Formulierungen:

25,9 Gew.-% des alkoxysilyl-modifizierten Polymers nach den jeweiligen Beispielen wurde mit 18,1 Gew.-% von Diisoundecylphthalat, 51,1 Gew.-% einer gefällten Kreide (Socal ® U1S2, Solvay), 0,5 Gew.-% Titandioxid (Kronos® 2360, Kronos), 1,4 Gew.-% Haftvermittler (Dynasylan® AMMO, Evonik), 1,1 Gew.-% Trocknungsmittel (Dynasylan® VTMO, Evonik), 1,5 Gew.-% Teile eines Antioxidans-Stabilisator-Gemisches (Verhältnis Irganox® 1135:Tinuvin® 1130:Tinuvin® 292 = Verhältnis 1:2:2 und 0,4 Gew.-% des Härtungskatalysators (TIB® KAT 223, TIB) im Mischer (Speedmixer® FVS 600, Hausschild) intensiv vermischt. Die fertige Formulierung wurde in PE-Kartuschen überführt und vor der Applikation mindestens 24h bei Raumtemperatur gelagert. Da die Formulierungen der alkoxysilyl-modifizierten Polymere in den oben genannten Beispielen in allen Fällen identisch waren, wurde die Ergebnisdiskussion anhand der Benennung, des als Basis der Formulierung genutzten alkoxysilyl-modifizierten Polymere durchgeführt.

### Bestimmung von Bruchspannung und Bruchdehnung in Anlehnung an DIN 53504:

Die Formulierung wurde mit einer Schichtdicke von 2 mm auf einer PE-Oberfläche aufgerakelt. Die Filme wurden 7 Tage bei 23 °C und 50% relativer Luftfeuchte gelagert. Anschließend wurden aus den Filmen mit Hilfe einer Schneidform und einer Kniehebelpresse S2-Schulterstäbe ausgestanzt.

### Die so hergestellten Schulterstäbe wurden zur Prüfung in eine Universalprüfmaschine (Fa. Shimadzu) eingespannt, und es wurden die Bruchkraft und die Bruchdehnung beim Dehnen der Probekörper mit konstanter Geschwindigkeit (200 mm/min) ermittelt.

### Bestimmung des Weiterreißwiderstandes in Anlehnung an DIN ISO 34-1, Methode B, Verfahren (a):

Die Formulierung wurde mit einer Schichtdicke von 2 mm auf einer PE-Oberfläche aufgerakelt. Die Filme wurden 7 Tage bei 23 °C und 50% relativer Luftfeuchte gelagert. Anschließend wurden aus den Filmen mit Hilfe einer Schneidform und einer Kniehebelpresse Winkelprobekörper ausgestanzt.
Die so hergestellten Winkelprobekörper wurden zur Prüfung in eine Universalprüfmaschine (Fa. Shimadzu) eingespannt, und es wurde der Weiterreißwiderstand bestimmt (Messgeschwindigkeit: 500 mm/min).

### Bestimmung der Zugscherfestigkeit von Überlappungsklebungen in Anlehnung an DIN EN 1465

Mit der angefertigten Formulierung wurden Überlappungsverklebungen erstellt. Hierbei wurden zwei Edelstahl Substrate (V2A, 1.4301) eingesetzt. Der Bereich der Überlappungsverklebung betrug 500 mm², die Schichtdicke der Verklebung betrug 0,1 mm. Die Aushärtung der Verklebungen erfolgte bei 23°C und 50% relativer Luftfeuchte. Nach 21 Tagen wurden die Verklebungen in eine Universalprüfmaschine (Fa. Shimadzu) eingespannt, und es wurde mit konstanter Geschwindigkeit (10 mm/min) eine Kraft auf die Verklebung ausgeübt, bis ein Bruch der Verklebung eintrat. Die Bruchspannung wurde ermittelt.

**Tabelle 2:**

| Viskositäten der alkoxysilyl-modifizierten Polymere und mechanische Kennwerte der ausgehärteten Formulierung am S2-Schulterstab und an einer Überlappungsverklebung zweier V2A-Bleche: | | | | | |
|---|---|---|---|---|---|
| Polymer nach Beispiel | Viskosität | S2-Schulterstab | | Winkelprobekörper | Verklebung |
| | [Pa · s] (bei 25°C) | Bruchdehnung | Bruchspannung | Weiterreißwiderstand | Bruchspannun g |
| | | [%] | [N/mm²] | [N/mm] | [N/mm²] |
| **9** | **70,7** | **645** | **1,8** | **10,2** | **1,4** |
| **10** | **59,6** | **362** | **2,2** | **14,2** | **2,4** |
| **11** | **51,8** | **235** | **2,2** | **8,5** | **2,5** |
| **12** | **39,2** | **163** | **2,4** | **6,5** | **3,2** |
| **13** | **51,0** | **213** | **1,5** | **4,6** | **1,6** |
| **14** | **56,2** | **220** | **2,2** | **8,7** | **2,7** |
| **15** | **111,4** | **375** | **2,0** | **12,8** | **2,0** |
| **16** | **62,3** | **420** | **1,9** | **7,3** | **1,7** |

Die Bruchspannung der Verklebung der erfindungsgemäßen Beispiele 10-12 und 14-16 ist durchweg erhöht gegenüber den Bruchspannungen der Vergleichsbeispiele 9 und 13, was auf eine stärkere Vernetzung des gebildeten Polymernetzwerkes hindeutet.

Die in Tabelle 2 angegebenen Kennwerte des S2-Schulterstabs des Vergleichsbeispiels 9 suggerieren ein ähnlich gutes Eigenschaftsprofil wie die erfindungsgemäßen Beispiele 10-12 und 14-16. Jedoch zeigt der S2-Schulterstab von Vergleichsbeispiel 9 ein plastisches Bruch-Dehnungs-Verhalten, sprich er weist keinerlei elastische Rückstellung auf und ist somit für die angedachten Kleb- und/oder Dichtstoffanwendungen gänzlich ungeeignet.

Im Vergleich zum S2-Schulterstab von Vergleichsbeispiel 13 konnte in allen Fällen durch die erfindungsgemäßen Beispiele der Weiterreißwiderstand merklich erhöht werden, im Falle von Beispiel 10 sogar um mehr als 200%. Auch die Bruchspannung- und Bruchdehnung konnten in allen Fällen durch die erfindungsgemäßen alkoxysilyl-modifizierten Polymere merklich verbessert werden.

## Patentansprüche

1. Alkoxysilyl-modifizierte Polymere nach Formel (I)
MᵢDⱼURᵤAPᵥ Formel (I)
wobei die Fragmente M und D nicht untereinander, sondern über die Gruppen UR und/oder AP miteinander verknüpft sind, und die Gruppen UR und AP nicht untereinander verknüpft sind, sondern dementsprechend über die Fragmente M und D miteinander verknüpft sind und für die Indices gilt:
i = 1 bis 2, bevorzugt größer 1 bis 2, besonders bevorzugt 2,
j = 1 bis 10, bevorzugt 1 bis 8, besonders bevorzugt 2 bis 6, insbesondere bevorzugt ≥ 1,
u = 0 bis 11, bevorzugt 1 bis 8, mehr bevorzugt 2 bis 6, insbesondere 2 bis 4,
v = 0 bis 6, bevorzugt größer 0 bis 4, insbesondere 0,1 bis 2,
mit der Maßgabe, dass u + v ≥ 1 ist,
wobei
M unabhängig voneinander ein alkoxysilyl-modifizierter Polyetherrest, bevorzugt mit 8 bis 400 Kohlenstoffatomen ist, insbesondere bevorzugt ist M ein Rest der Formel (la), wobei 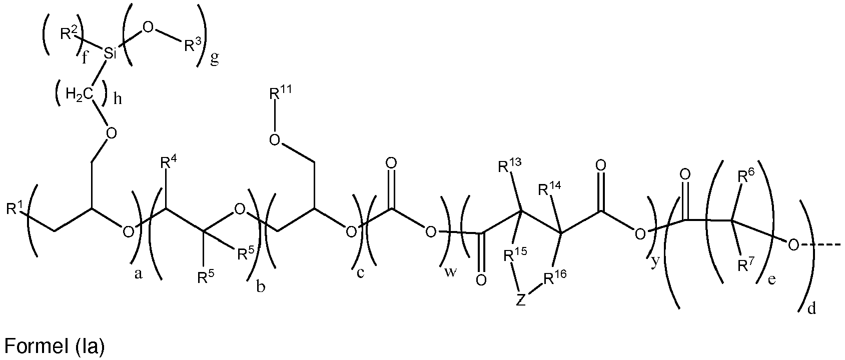
mit
a = 0,1 bis 100, bevorzugt 0,5 bis 50, weiter bevorzugt 1 bis 10, besonders bevorzugt größer 1 bis 5,
b = 2 bis 1000, bevorzugt 2 bis 500, weiter bevorzugt größer 2 bis 400, insbesondere bevorzugt 10 bis 100,
c = 0 bis 200, bevorzugt 0 bis 100, weiter bevorzugt größer 0 bis 80, insbesondere bevorzugt ≥ 0 bis 50,
d = 0 bis 200, bevorzugt 0 bis 100, weiter bevorzugt größer 0 bis 80, insbesondere bevorzugt ≥ 0 bis 50,
w = 0 bis 200, bevorzugt 0 bis 100, weiter bevorzugt größer 0 bis 80, insbesondere bevorzugt ≥ 0 bis 50,
y = 0 bis 500, bevorzugt 0 bis 300, besonders bevorzugt 0 bis 200 und insbesondere bevorzugt ≥ 0 bis 100 ist,
e = 1 bis 10,
f = 0 bis 2,
g = 1 bis 3,
mit der Maßgabe, dass g + f = 3,
h = 0 bis 10, bevorzugt 1 bis 6, insbesondere bevorzugt 1, 2 oder 3 mit der Maßgabe, dass die Gruppen mit den Indices a, b, c, d, w und y frei permutierbar über die Molekülkette sind, wobei die Gruppen mit den Indices w und y jeweils nicht auf sich selbst oder auf die jeweils andere Gruppe folgen dürfen und
mit der Maßgabe, dass die verschiedenen Monomereinheiten sowohl der Fragmente mit den Indices a, b, c, d, w und y als auch der gegebenenfalls vorhandenen Polyoxyalkylenkette des Substituenten R1 untereinander blockweise aufgebaut sein können, wobei einzelne Blöcke auch mehrfach vorkommen können und untereinander statistisch verteilt sein können, oder aber einer statistischen Verteilung unterliegen und zudem untereinander frei permutierbar, im Sinne von in beliebiger Reihenfolge anzuordnen sind, mit der Einschränkung, dass die Gruppen mit den Indices w und y jeweils nicht auf sich selbst oder auf die jeweils andere Gruppe folgen dürfen, und wobei
R¹ = unabhängig voneinander ein gesättigter oder ungesättigter, linearer oder verzweigter organischer Kohlenwasserstoffrest ist, der als Heteroatome O, S und / oder N enthalten kann,
bevorzugt enthält der Kohlenwasserstoffrest 1 bis 400 Kohlenstoffatome, bevorzugt 2, 3 oder 4 bis 200 Kohlenstoffatome,
R² = unabhängig voneinander eine Alkylgruppe mit 1 bis 8 Kohlenstoffatomen,
insbesondere Methyl-, Ethyl-, Propyl-, oder Isopropyl-,
R³ = unabhängig voneinander eine Alkylgruppe mit 1 bis 8 Kohlenstoffatomen,
insbesondere Methyl-, Ethyl-, Propyl- oder Isopropyl-, R⁴ = unabhängig voneinander ein Wasserstoffradikal, eine Alkylgruppe mit 1 bis 20 Kohlenstoffatomen, eine Aryl- oder Alkarylgruppe,
bevorzugt Wasserstoff, Methyl-, Ethyl-, Octyl-, Decyl-, Dodecyl-, Phenyl-, Benzyl-, besonders bevorzugt Wasserstoff, Methyl- oder Ethyl-,
R⁵ = unabhängig voneinander ein Wasserstoffradikal oder eine Alkylgruppe mit 1 bis 8 Kohlenstoffatomen, bevorzugt Wasserstoff, Methyl- oder Ethyl-, insbesondere bevorzugt Wasserstoff,
oder R⁴ und einer der Reste R⁵ können gemeinsam einen Ring bilden, der die Atome, an die R⁴ und R⁵ gebunden sind, einschließt, bevorzugt enthält dieser Ring 5 bis 8 Kohlenstoffatome,
R⁶ und R⁷ = unabhängig voneinander ein Wasserstoffradikal, eine Alkylgruppe mit 1 bis 20 Kohlenstoffatomen, eine Aryl- oder Alkarylgruppe und/oder eine Alkoxygruppe, bevorzugt eine Methylgruppe,
R¹¹ = unabhängig voneinander ein gesättigter oder ungesättigter, aliphatischer oder aromatischer Kohlenwasserstoffrest mit 2 bis 30 C-Atomen, insbesondere bis 24 C-Atomen, der gegebenenfalls substituiert ist, bevorzugt handelt es sich um eine Alkylgruppe mit 1 bis 16 Kohlenstoffatomen, besonders bevorzugt mit 6 bis 12 Kohlenstoffatomen, deren Kette durch Sauerstoff unterbrochen sein kann und weiter funktionelle Gruppen tragen kann wie z.B. Carboxylgruppen gegebenenfalls mit Alkoholen wie z.B. Methanol, Ethanol, Propanol, Butanol oder Hexanol verestert, Hydroxygruppen gegebenenfalls mit Säuren wie Essigsäure, Buttersäure, Neodecansäure oder (Meth)Acrylsäure bzw. den Polymerisaten der (Meth)Acrylsäure verestert, oder eine Arylgruppe mit 6 bis 20 Kohlenstoffatomen, oder eine Alkarylgruppe mit 7 bis 30, bevorzugt 7 bis 20 Kohlenstoffatomen, bevorzugt ausgewählt aus Methyl-, Ethyl-, Propyl-, Butyl-, iso-Butyl-, tert-Butyl-, 2-Pentyl-, 3-Pentyl-, 2-Methylbutyl-, 3-Methylbutyl-, 2-Methyl-2-butyl-, 3-Methyl-2-butyl-, 2,2-Dimethylpropyl-, Hexyl-, Heptyl-, Octyl-, 2-Ethylhexyl-, 2-Propylheptyl-, 2-Butyloctanyl-, 2-Methylundecyl-, 2-Propylnonyl-, 2-Ethyldecyl-, 2-Pentylheptyl-, 2-Hexyldecyl-, 2-Butyltetradecyl-, 2-Dodecylhexadecyl-, 2-Tetradecyloctadecyl-, 3,5,5-Trimethylhexyl-, Isononanyl-, Isotridecyl-, Isomyristyl-, Isostearyl-, 2-Octyldodecyl-Triphenylmethyl-, C(O)-(CH2)5-C-(CH3)3- (Rest der Neodecansäure), C₁₂/C₁₄-Alkyl-, Phenyl-, Kresyl-, tert-Butylphenyl- oder Benzylgruppe, besonders bevorzugt eine 2-Ethylhexyl-, C(O)-(CH2)5-C-(CH3)3- (Rest der Neodecansäure), C₁₂/C₁₄-Alkyl-, Phenyl-, Kresyl-, tert-Butylphenylgruppe, ganz besonders bevorzugt eine tert-Butylphenyl- oder 2-Ethylhexylgruppe,
R¹³, R¹⁴ = unabhängig voneinander Wasserstoff und/oder ein organischer Rest, bevorzugt Alkyl-, Alkenyl-, Alkyliden, Alkoxy-, Aryl- und/oder Aralkylgruppen, oder gegebenenfalls können R¹³ und/oder R¹⁴ auch nicht vorhanden sein, wobei wenn R¹³ und R¹⁴ nicht vorhanden sind, statt der Reste R¹³ und R¹⁴ eine C=C Doppelbindung vorhanden ist,
das überbrückende Fragment Z kann vorhanden oder nicht vorhanden sein,
ist das überbrückende Fragment Z nicht vorhanden so sind,
R¹⁵ und R¹⁶ = unabhängig voneinander Wasserstoff und/oder ein organischer Rest, bevorzugt Alkyl-, Alkenyl-, Alkyliden, Alkoxy-, Aryl- und/oder Aralkylgruppen, wobei für den Fall, dass einer der Reste R¹³ oder R¹⁴ nicht vorhanden ist, der jeweilige geminale Rest (also R¹⁵ wenn R¹³ nicht vorhanden ist und R¹⁶ wenn R¹⁴ nicht vorhanden ist) ein Alkylidenrest, bevorzugt Methyliden (=CH2), ist,
ist das überbrückende Fragment Z vorhanden, so sind R¹⁵ und R¹⁶ = Kohlenwasserstoffreste, die cycloaliphatisch oder aromatisch über das Fragment Z verbrückt sind, wobei Z einen divalenten Alkylen- oder Alkenylenrest darstellt, der weiter substituiert sein kann,
das Fragment mit dem Index y kann beispielsweise durch den Einbau cyclischer Anhydride erhalten werden, bevorzugte cyclische Anhydride sind Succinanhydrid, Maleinsäureanhydrid, Itaconanhydrid, Glutaranhydrid, Adipinanhydrid, Citraconanhydrid, Phthalsäureanhydrid, Hexahydrophthalsäureanhydrid und Trimellitanhydrid sowie polyfunktionelle Säureanhydride wie Pyromellit-Dianhydrid, Benzophenon-3,3',4,4'-tetracarbonsäureDianhydrid, 1,2,3,4-Butantetracarbonsäuredianhydrid oder radikalisch polymerisierte Homo- oder Copolymerisate von Maleinsäureanhydrid mit Ethylen, Isobutylene, Acrylnitril, Vinylacetat oder Styrol, besonders bevorzugte Anhydride sind Succinanhydrid, Maleinsäureanhydrid, Itaconanhydrid, Glutaranhydrid, Adipinanhydrid, Citraconanhydrid, Phthalsäureanhydrid, Hexahydrophthalsäureanhydrid,
und wobei für das Fragment D gilt:
D ist ein Polyetherrest -(D^{A})ₜ-D^{X} mit t gleich 2,
wobei
D^{X} ein t-valenter funktioneller, gesättigter oder ungesättigter, linearer oder verzweigter organischer Kohlenwasserstoffrest ist, der als Heteroatome O, S, Si und / oder N enthalten kann, wobei jeder der Reste D^{A} kovalent an den Rest D^{X} gebunden ist,
bevorzugt enthält der Kohlenwasserstoffrest 8 bis 1500 Kohlenstoffatome,
bevorzugt ist die Kohlenstoffkette des Kohlenwasserstoffrestes durch Sauerstoffatome unterbrochen,
bevorzugt enthält der Kohlenwasserstoffrest Siliziumatom-haltige Substituenten,
bevorzugt sind die Siliziumatom-haltigen Substituenten Alkoxysilylgruppen,
bevorzugt ist der von Sauerstoffatomen unterbrochene Kohlenwasserstoffrest ein Polyoxyalkylenrest, Polyetherrest und/oder Polyetheralkoxyrest, oder
D^{X} kann eine einfach oder mehrfach annelierte phenolische Gruppe sein,
oder besonders bevorzugt kann D^{X} ein t-valenter Rest von einem t-fach hydroxyliertem Alkohol, Polyetherol, Polyesterol, Siloxan, perfluorierten Polyetherol oder (poly)-Urethan, bevorzugt OH-funktionelle Polyether, Polyester, Polycarbonate, Polyetherester oder perfluorierten Polyether und Mischpolymere daraus, insbesondere bevorzugt OH-funktionelle Polyether oder Polyester, sein,
und wobei D^{A} ein Fragment der Formel (II) 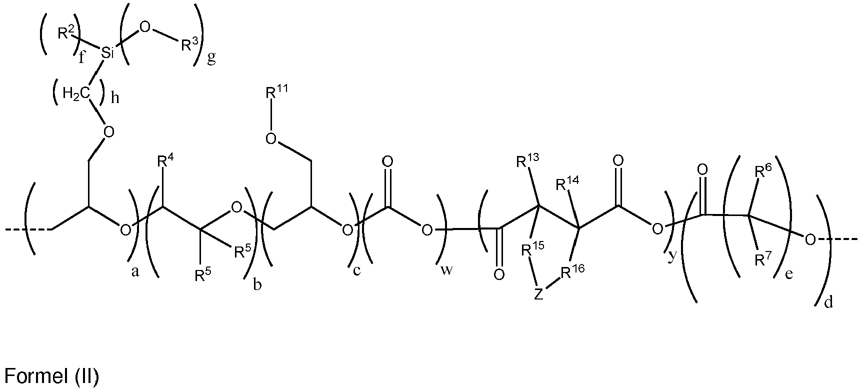
ist, mit a bis h, w und y, R² bis R¹⁶ und Z unabhängig voneinander definiert wie in Formal (Ia),
mit der Maßgabe, dass die Summe aller Indizes b der Formeln (Ia) und (II) mindestens 5, bevorzugt mindestens 10, insbesondere bevorzugt mindestens 15 ergibt und die Summe aller Indizes a der Formeln (Ia) und (II) größer 2 sein muss,
UR sind unabhängig voneinander gleiche oder verschiedene divalente Reste der Form -U-D^{C}-U-, wobei U eine -C(O)-NH-Gruppe ist, die über den Stickstoff an D^{C} gebunden ist, und
D^{C} unabhängig voneinander ein divalenter substituierter oder unsubstituierter, linearer oder verzweigter, gesättigter oder ungesättigter Kohlenwasserstoffrest mit 1 bis 30 Kohlenstoffatomen, ausgewählt aus Alkyl-, Alkenyl-, Aryl- oder Alkarylresten, welcher gegebenenfalls durch Heteroatome wie O, N und / oder S unterbrochen sein kann, eine Aryl- oder Alkarylgruppe ist, bevorzugt ist DC ein divalenter Kohlenwasserstoffrest mit 6 - 30 Kohlenstoffatomen, insbesondere bevorzugt ist D^{C} gleich ein Isophoronrest,
AP sind unabhängig voneinander gleiche oder verschiedene Reste der allgemeinen Formeln (IIIa) oder (IIIb)

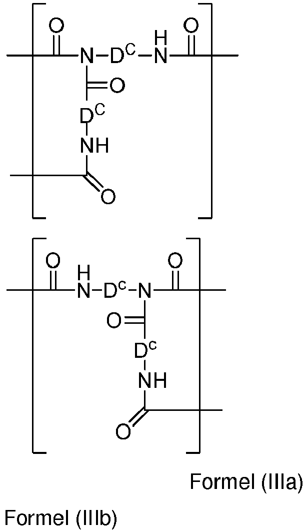

2. Alkoxysilyl-modifizierte Polymere gemäß Anspruch 1, **dadurch gekennzeichnet, dass** in Formel (I) das Verhältnis der Indices a der Fragmente M zu D der folgenden Gleichung gehorcht: a (M) > 2 * a (D).

3. Alkoxysilyl-modifizierte Polymere gemäß Anspruch 1 oder 2, **dadurch gekennzeichnet, dass** in Formel (I)
i = 1 bis 2, bevorzugt größer 1 bis 2, besonders bevorzugt 2
j = 1 bis 6, bevorzugt 1, 2, 3 oder 4
u = j + 1
v = 0,
wobei M Formel (Ia) entspricht mit
a = 0,1 bis 50, bevorzugt 0,5 bis 20, weiter bevorzugt 1 bis 4,
b = 10 bis 500, weiter bevorzugt 12 bis 100
c = 0 bis 20, bevorzugt 0 bis 4
d = 0 bis 20, bevorzugt 0
w = 0 bis 20, bevorzugt 0
y = 0 bis 20, bevorzugt 0,
e = 1 bis 10,
f = 0 bis 2
g = 1 bis 3
mit der Maßgabe, dass g + f = 3,
sowie h = 1, 2 oder 3 und
und wobei D Formel (II) entspricht mit
a = 0 bis 10, bevorzugt größer 0,1 bis 5, weiter bevorzugt 0,2 bis 2, insbesondere 0,25 bis 1,
b = 10 bis 700, weiter bevorzugt 12 bis 350,
c = 0 bis 20, bevorzugt 0 bis 10
d = 0 bis 20, bevorzugt 0
w = 0 bis 20, bevorzugt 0
y = 0 bis 20, bevorzugt 0,
e = 1 bis 10,
f = 0 bis 2
g = 1 bis 3
mit der Maßgabe, dass g + f = 3,
sowie h = 1, 2 oder 3
und wobei die Definitionen der nicht explizit genannten Reste gelten wie vorab in Anspruch 2 definiert,
und wobei für UR gilt
UR sind unabhängig voneinander gleiche oder verschiedene divalente Reste der Form -U-D^{C}-U-, mit D^{C} unabhängig voneinander ein divalenter substituierter oder unsubstituierter, linearer oder verzweigter, gesättigter oder ungesättigter Kohlenwasserstoffrest mit 1 bis 30 Kohlenstoffatomen, insbesondere bevorzugt ist D^{C} gleich ein Isophoronrest.

4. Verfahren zur Herstellung der alkoxysilyl-modifizierten Polymere der Ansprüche 1 bis 3, umfassend die Schritte
(1) Umsetzen mindestens eines dihydroxy-funktionellen Starters (A), ausgewählt aus der Gruppe der Alkohole oder Polyetherole mit mindestens einem Alkylenoxid und mindestens einem Alkoxysilylgruppen tragenden Epoxid,
(2) Umsetzen mindestens eines monohydroxy-funktionellen Starters (B), ausgewählt aus der Gruppe der Alkohole oder Polyetherole mit mindestens einem Alkylenoxid und mindestens einem Alkoxysilylgruppen tragenden Epoxid, und
(3) Umsetzen der Produkte aus den Verfahrensschritten (1) und (2) mit mindestens einem Diisocyanat und gegebenenfalls weiteren Reaktanden.

5. Verfahren nach Anspruch 4 **dadurch gekennzeichnet, dass** der Verfahrensschritt (3) zweistufig durchgeführt wird, wobei in der ersten Stufe (3a) zunächst das Alkoxylierungsprodukt H-D-H aus Verfahrensschritt (1) dergestalt mit einem Diisocyanat zur Reaktion gebracht wird, dass sich ein NCO-funktionelles Intermediat bildet, welches anschließend in der zweiten Stufe (3b) mit den monohydroxy-funktionellen Alkoxylierungsprodukt H-M aus Verfahrensschritt (2) zum finalen Polymer umgesetzt wird.

6. Verfahren nach einem der Ansprüche 4 und 5 **dadurch gekennzeichnet, dass** im Verfahrensschritt (3) in der zweiten Stufe (3b) neben alkoxysilyl-modifizierten monohydroxy-funktionellen Alkoxylierungsprodukten H-M auch nicht-alkoxysilyl-modifizierte Verbindungen H-M eingesetzt werden.

7. Verfahren nach einem der Ansprüche 4 bis 6 zur Herstellung von alkoxysilyl-modifizierten Polymeren gemäß Formel (I) **dadurch gekennzeichnet, dass** in den Schritten (1) und (2) mindestens eine Verbindung der allgemeinen Formel (V) 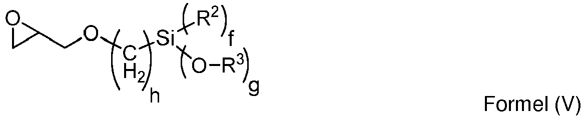 mit f, g, h, R² und R³ gemäß Formel (Ia) und (II)
und mindestens einem Alkylenoxid, vorzugsweise Propylenoxid und ggf. Ethylenoxid, umgesetzt wird.

8. Verfahren nach einem der Ansprüche 4 bis 7 **dadurch gekennzeichnet, dass** der dihydroxy-funktionelle Starter aus Verfahrensschritt (1) ausgewählt ist aus Polyetherolen, Polycarbonatpolyolen und Polyethercarbonaten und der monohydroxy-funktionelle Starter aus Verfahrensschritt (2) bevorzugt ausgewählt ist aus Butanol, Ethanol oder Polyetherol.

9. Verfahren nach einem der Ansprüche 4 bis 8, **dadurch gekennzeichnet, dass** im Verfahrensschritt (3) Isophorondiisocyanat als Diisocyanat eingesetzt wird.

10. Verfahren nach einem der Ansprüche 4 bis 9 zur Herstellung alkoxysilyl-modifizierter Polymere mit verbessertem Weiterreißwiderstand.

11. Härtbare Zusammensetzung, enthaltend zumindest ein alkoxysilylmodifiziertes Polymer der Ansprüche 1 bis 3, vorzugsweise hergestellt nach einem Verfahren nach einem der Ansprüche 4 bis 10, und zumindest einen Härtungskatalysator.

12. Härtbare Zusammensetzung nach Anspruch 11, **dadurch gekennzeichnet, dass** die Zusammensetzung weiterhin einen oder mehrere Haftvermittler und/oder einen oder mehrere chemische Feuchtigkeits-Trocknungsmittel enthält, wobei als Haftvermittler vorzugsweise 3-Aminopropyltriethoxysilan, 3-Aminopropyltrimethoxysilan, N-(2-Aminoethyl)-3-aminopropyltrimethoxysilan oder oligomere Amino/Alkyl-Alkoxysilane und als chemisches Feuchtigkeits-Trocknungsmittel vorzugsweise Vinyltriethoxysilan oder Vinyltrimethoxysilan enthalten ist.

13. Verwendung der Zusammensetzungen der Ansprüche 11 und/oder 12 für Kleb- und/oder Dichtstoffanwendungen.

14. Verwendung von alkoxysilyl-modifizierten Polymeren der Ansprüche 1 bis 3 zur Verstärkung, Nivellierung, Modifikation, Verklebung, Abdichtung und/oder Beschichtung von Substraten.

15. Verwendung von alkoxysilyl-modifizierten Polymeren der Ansprüche 1 bis 3, insbesondere nach Anspruch 2, in härtbaren Zusammensetzungen, vorzugsweise nach Anspruch 11 oder 12 zur Verbesserung des Weiterreißwiderstandes.

## Claims

1. Alkoxysilyl-modified polymers of formula (I)
MᵢDⱼURᵤAPᵥ Formula (I)
where the M and D fragments are linked not to one another but instead with one another via the UR and/or AP groups, and the UR and AP groups are not linked to one another but instead, accordingly, are linked with one another via the M and D fragments, and the indices are as follows:
i = 1 to 2, preferably greater than 1 to 2, more preferably 2,
j = 1 to 10; preferably 1 to 8, more preferably 2 to 6; especially preferably ≥ 1,
u = 0 to 11, preferably 1 to 8, more preferably 2 to 6, more particularly 2 to 4,
v = 0 to 6, preferably greater than 0 to 4, more particularly 0.1 to 2,
with the proviso that u + v ≥ 1,
where
M is independently at each occurrence an alkoxysilyl-modified polyether radical, preferably having 8 to 400 carbon atoms, M especially preferably being a radical of the formula (Ia), where 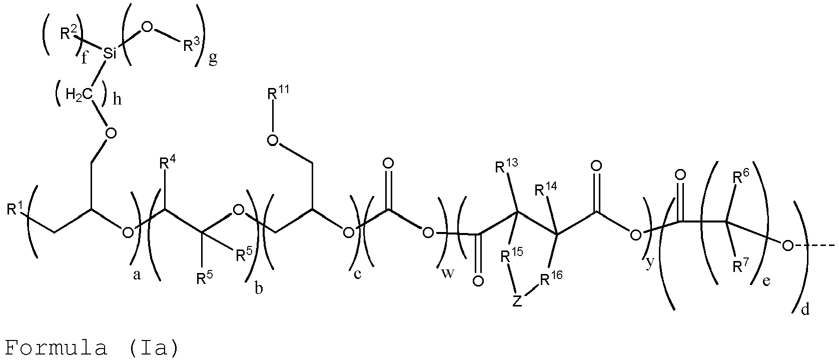 with
a = 0.1 to 100, preferably 0.5 to 50, further preferably 1 to 10, more preferably greater than 1 to 5,
b = 2 to 1000, preferably 2 to 500, further preferably greater than 2 to 400, especially preferably 10 to 100,
c = 0 to 200, preferably 0 to 100, further preferably greater than 0 to 80, especially preferably ≥ 0 to 50,
d = 0 to 200, preferably 0 to 100, further preferably greater than 0 to 80, especially preferably ≥ 0 to 50,
w = 0 to 200, preferably 0 to 100, further preferably greater than 0 to 80, especially preferably ≥ 0 to 50,
y = 0 to 500, preferably 0 to 300, more preferably 0 to 200 and especially preferably ≥ 0 to 100,
e = 1 to 10,
f = 0 to 2,
g = 1 to 3,
with the proviso that g + f = 3,
h = 0 to 10, preferably 1 to 6, especially preferably 1, 2 or 3,
with the proviso that the groups with the indices a, b, c, d, w and y are freely permutable over the molecule chain, it being disallowed for each of the groups with the indices w and y to follow itself or the other respective group, and
with the proviso that the various monomer units both of the fragments having the indices a, b, c, d, w and y and of any polyoxyalkylene chain present in the substituent R1 may be formed in blocks with respect to one another, where individual blocks may also occur multiply and be distributed statistically with respect to one another, or else are subject to a statistical distribution and, moreover, are freely permutable with one another, in that they can be arranged in any desired order, with the restriction that neither of the groups with the indices w and y may follow themselves or the other respective group,
and where
R¹ = independently at each occurrence a saturated or unsaturated, linear or branched organic hydrocarbyl radical which may contain O, S and/or N as heteroatoms, the hydrocarbyl radical preferably contains 1 to 400 carbon atoms, preferably 2, 3 or 4 to 200 carbon atoms,
R² = independently at each occurrence an alkyl group having 1 to 8 carbon atoms,
more particularly methyl, ethyl, propyl or isopropyl,
R³ = independently at each occurrence an alkyl group having 1 to 8 carbon atoms,
more particularly methyl, ethyl, propyl or isopropyl,
R⁴ = independently at each occurrence a hydrogen radical, an alkyl group having 1 to 20 carbon atoms, or an aryl or alkaryl group,
preferably hydrogen, methyl, ethyl, octyl, decyl, dodecyl, phenyl, benzyl, more preferably hydrogen, methyl or ethyl,
R⁵ = independently a hydrogen radical or an alkyl group having 1 to 8 carbon atoms, preferably hydrogen, methyl or ethyl, especially preferably hydrogen,
or R⁴ and one of the R⁵ radicals may together form a ring including the atoms to which R⁴ and R⁵ are bonded, this ring preferably containing 5 to 8 carbon atoms,
R⁶ and R⁷ = independently at each occurrence a hydrogen radical, an alkyl group having 1 to 20 carbon atoms, an aryl or alkaryl group and/or an alkoxy group, preferably a methyl group,
R¹¹ = independently at each occurrence a saturated or unsaturated, aliphatic or aromatic hydrocarbyl radical which has 2 to 30 carbon atoms, especially to 24 carbon atoms, and may optionally be substituted, preferably an alkyl group having 1 to 16 carbon atoms, more preferably having 6 to 12 carbon atoms, the chain of which may be interrupted by oxygen and which may bear further functional groups, for example carboxyl groups optionally esterified with alcohols, for example methanol, ethanol, propanol, butanol or hexanol, hydroxyl groups optionally esterified with acids such as acetic acid, butyric acid, neodecanoic acid or (meth)acrylic acid or the polymers of (meth)acrylic acid, or an aryl group having 6 to 20 carbon atoms, or an aralkyl group having 7 to 30 and preferably 7 to 20 carbon atoms, preferably selected from methyl, ethyl, propyl, butyl, isobutyl, tert-butyl, 2-pentyl, 3-pentyl, 2-methylbutyl, 3-methylbutyl, 2-methyl-2-butyl, 3-methyl-2-butyl, 2,2-dimethylpropyl, hexyl, heptyl, octyl, 2-ethylhexyl, 2-propylheptyl, 2-butyloctanyl, 2-methylundecyl, 2-propylnonyl, 2-ethyldecyl, 2-pentylheptyl, 2-hexyldecyl, 2-butyltetradecyl, 2-dodecylhexadecyl, 2-tetradecyloctadecyl, 3,5,5-trimethylhexyl, isononanyl, isotridecyl, isomyristyl, isostearyl, 2-octyldodecyl, triphenylmethyl, C(O)-(CH2)5-C-(CH3)3- (radical of neodecanoic acid), C₁₂/C₁₄-alkyl, phenyl, cresyl, tert-butylphenyl or benzyl group, more preferably a 2-ethylhexyl, C(O)-(CH2)5-C-(CH3)3- (radical of neodecanoic acid), C₁₂/C₁₄-alkyl, phenyl, cresyl, tert-butylphenyl group, most preferably a tert-butylphenyl or 2-ethylhexyl group,
R¹³, R¹⁴ = independently at each occurrence hydrogen and/or an organic radical, preferably alkyl, alkenyl, alkylidene, alkoxy, aryl and/or aralkyl groups, or else R¹³ and/or R¹⁴ may optionally be absent, where, when R¹³ and R¹⁴ are absent, there is a C=C double bond in place of the R¹³ and R¹⁴ radicals,
the bridging Z fragment may be present or absent,
where, in the absence of the bridging Z fragment,
R¹⁵ and R¹⁶ = independently at each occurrence hydrogen and/or an organic radical, preferably alkyl, alkenyl, alkylidene, alkoxy, aryl and/or aralkyl groups, and, if one of the radicals R¹³ or R¹⁴ is absent, the respective geminal radical (i.e. R¹⁵ if R¹³ is absent and R¹⁶ if R¹⁴ is absent) is an alkylidene radical, preferably methylidene (=CH2),
where, in the presence of the bridging Z fragment,
R¹⁵ and R¹⁶ = hydrocarbyl radicals bridged cycloaliphatically or aromatically via the Z fragment, where Z represents a divalent alkylene or alkenylene radical which may have further substitution,
the fragment with the index y can be obtained, for example, by the incorporation of cyclic anhydrides; preferred cyclic anhydrides being succinic anhydride, maleic anhydride, itaconic anhydride, glutaric anhydride, adipic anhydride, citraconic anhydride, phthalic anhydride, hexahydrophthalic anhydride and trimellitic anhydride and also polyfunctional acid anhydrides such as pyromellitic dianhydride, benzophenone-3,3',4,4'-tetracarboxylic dianhydride, 1,2,3,4-butanetetracarboxylic dianhydride, or free-radically polymerized homopolymers or copolymers of maleic anhydride with ethylene, isobutylenes, acrylonitrile, vinyl acetate or styrene; particularly preferred anhydrides being succinic anhydride, maleic anhydride, itaconic anhydride, glutaric anhydride, adipic anhydride, citraconic anhydride, phthalic anhydride, hexahydrophthalic anhydride,
and where, for the D fragment:
D is a polyether radical -(D^{A})ₜD^{X} where t is 2,
where
D^{X} is a t-valent functional, saturated or unsaturated, linear or branched organic hydrocarbyl radical which may contain O, S, Si and/or N as heteroatoms, with each of the D^{A} radicals is covalently bonded to the D^{X} radical,
the hydrocarbyl radical preferably containing 8 to 1500 carbon atoms,
the carbon chain of the hydrocarbyl radical preferably being interrupted by oxygen atoms,
the hydrocarbyl radical preferably comprising silicon atom-containing substituents,
the silicon atom-containing substituents preferably being alkoxysilyl groups,
the hydrocarbyl radical interrupted by oxygen atoms preferably being a polyoxyalkylene radical, polyether radical and/or polyetheralkoxy radical, or
D^{X} may be a singly or multiply fused phenolic group,
or D^{X} more preferably may be a t-valent radical of a t-tuply hydroxylated alcohol, polyetherol, polyesterol, siloxane, perfluorinated polyetherol or (poly)urethane, preferably OH-functional polyethers, polyesters, polycarbonates, polyetheresters or perfluorinated polyethers and copolymers thereof, especially preferably OH-functional polyethers or polyesters,
and where D^{A} is a fragment of the formula (II) 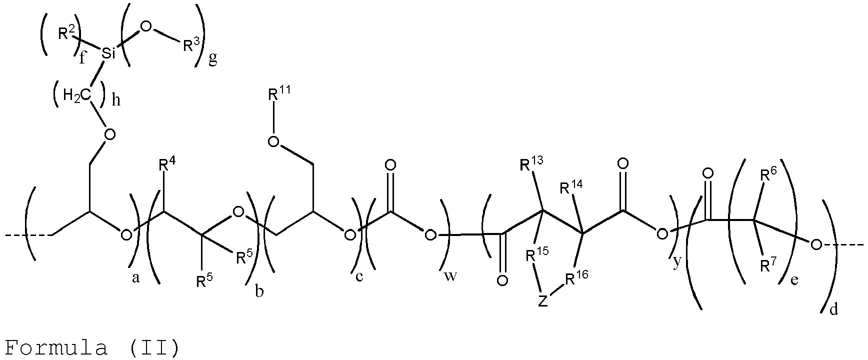 with a to h, w and y, R² to R¹⁶ and Z independently defined as in formula (la),
with the proviso that the sum total of all indices b in the formulae (Ia) and (II) is at least 5, preferably at least 10, especially preferably at least 15, and the sum of all indices a in the formulae (Ia) and (II) must be greater than 2,
UR are independently at each instance identical or different divalent radicals of the form -U-D^{C}-U-, where U is a -C(O)-NH- group bonded via the nitrogen to D^{C},
D^{C} independently at each occurrence is a divalent substituted or unsubstituted, linear or branched, saturated or unsaturated hydrocarbyl radical having 1 to 30 carbon atoms, selected from alkyl, alkenyl, aryl or alkaryl radicals, and may optionally be interrupted by heteroatoms such as O, N and/or S, or is an aryl or alkaryl group; DC preferably being a divalent hydrocarbyl radical having 6-30 carbon atoms, and D^{C} especially preferably being an isophorone radical,
AP independently at each occurrence are identical or different radicals of the general formula (IIIa) or (IIIb)

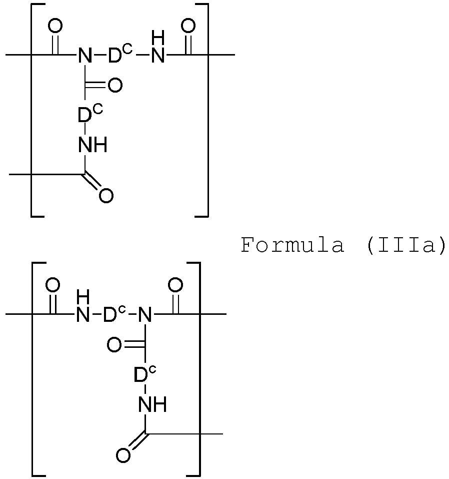

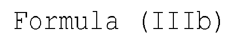

2. Alkoxysilyl-modified polymers according to Claim 1, **characterized in that**, in formula (I), the ratio of the indices a in the fragments M to D obeys the following equation: a (M) > 2 * a (D).

3. Alkoxysilyl-modified polymers according to Claim 1 or 2, **characterized in that**, in formula (I),
i = 1 to 2, preferably greater than 1 to 2, more preferably 2
j = 1 to 6, preferably 1, 2, 3 or 4
u = j + 1
v = 0 ,
where M corresponds to formula (Ia) with
a = 0.1 to 50, preferably 0.5 to 20, more preferably 1 to 4,
b = 10 to 500, more preferably 12 to 100,
c = 0 to 20, preferably 0 to 4
d = 0 to 20, preferably 0
w = 0 to 20, preferably 0
y = 0 to 20, preferably 0,
e = 1 to 10,
f = 0 to 2,
g = 1 to 3,
with the proviso that g + f = 3,
and h = 1, 2 or 3 and
and where D corresponds to formula (II) with
a = 0 to 10, preferably greater than 0.1 to 5, more preferably 0.2 to 2, more particularly 0.25 to 1,
b = 10 to 700, more preferably 12 to 350,
c = 0 to 20, preferably 0 to 10
d = 0 to 20, preferably 0
w = 0 to 20, preferably 0
y = 0 to 20, preferably 0,
e = 1 to 10,
f = 0 to 2,
g = 1 to 3,
with the proviso that g + f = 3,
and h = 1, 2 or 3
and where the definitions of the radicals that are not explicitly specified are as defined above in Claim 2,
and where for UR
UR independently at each occurrence are identical or different divalent radicals of the form
-U-D^{C}-U-, where D^{C} independently at each occurrence is a divalent substituted or unsubstituted, linear or branched, saturated or unsaturated hydrocarbyl radical having 1 to 30 carbon atoms, D^{C} being especially preferably an isophorone radical.

4. Process for preparing the alkoxysilyl-modified polymers of Claims 1 to 3, comprising the steps of
(1) reacting at least one dihydroxy-functional starter (A) selected from the group of the alcohols or polyetherols with at least one alkylene oxide and at least one epoxide bearing alkoxysilyl groups,
(2) reacting at least one monohydroxy-functional starter (B) selected from the group of the alcohols or polyetherols with at least one alkylene oxide and at least one epoxide bearing alkoxysilyl groups, and
(3) reacting the products from process steps (1) and (2) with at least one diisocyanate and optionally further reactants.

5. Process according to Claim 4, **characterized in that** process step (3) is conducted in two stages, the first stage (3a) involving initial reaction of the alkoxylation product H-D-H from process step (1) with a diisocyanate so as to form an NCO-functional intermediate, which is then reacted in the second stage (3b) with the monohydroxy-functional alkoxylation product H-M from process step (2) to give the final polymer.

6. Process according to either of Claims 4 and 5, **characterized in that**, in process step (3), in the second stage (3b), as well as alkoxysilyl-modified monohydroxy-functional alkoxylation products H-M, non-alkoxysilyl-modified compounds H-M are also used.

7. Process according to any of Claims 4 to 6 for preparation of alkoxysilyl-modified polymers of formula (I), **characterized in that**, in steps (1) and (2), at least one compound of the general formula (V) 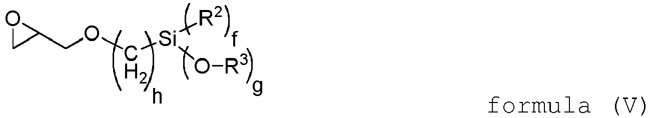
where f, g, h, R² and R³ are as per formula (Ia) and (II)
and at least one alkylene oxide, preferably propylene oxide and optionally ethylene oxide, is reacted.

8. Process according to any of Claims 4 to 7, **characterized in that** the dihydroxy-functional starter from process step (1) is selected from polyetherols, polycarbonate polyols and polyethercarbonates, and the monohydroxy-functional starter from process step (2) is preferably selected from butanol, ethanol and polyetherol.

9. Process according to any of Claims 4 to 8, **characterized in that**, in process step (3), isophorone diisocyanate is used as diisocyanate.

10. Process according to any of Claims 4 to 9 for preparation of alkoxysilyl-modified polymers having improved tear propagation resistance.

11. Curable composition comprising at least one alkoxysilyl-modified polymer of Claims 1 to 3, preferably prepared by a process according to any of Claims 4 to 10, and at least one curing catalyst.

12. Curable composition according to Claim 11, **characterized in that** the composition further comprises one or more adhesion promoters and/or one or more chemical moisture-drying agents, comprising as adhesion promoter preferably 3-aminopropyltriethoxysilane, 3-aminopropyltrimethoxysilane, N-(2-aminoethyl)-3-aminopropyltrimethoxysilane or oligomeric amino/alkyl-alkoxysilanes and comprising as chemical moisture-drying agent preferably vinyltriethoxysilane or vinyltrimethoxysilane.

13. Use of the compositions of Claims 11 and/or 12 for adhesive and/or sealant applications.

14. Use of alkoxysilyl-modified polymers of Claims 1 to 3 for strengthening, levelling, modifying, adhesively bonding, sealing and/or coating substrates.

15. Use of alkoxysilyl-modified polymers of Claims 1 to 3, especially according to Claim 2, in curable compositions, preferably according to Claim 11 or 12, for improving tear propagation resistance.

## Revendications

1. Polymères à modification alcoxysilyle selon la formule (I)
MᵢDⱼURᵤAPᵥ Formule (I)
dans laquelle les fragments M et D ne sont pas reliés entre eux, mais plutôt par le biais des groupes UR et/ou AP, et les groupes UR et AP ne sont pas reliés entre eux, mais plutôt par le biais des fragments M et D, et, pour les indices :
i = 1 à 2, de préférence plus de 1 à 2, de manière particulièrement préférée 2,
j = 1 à 10, de préférence 1 à 8, de manière particulièrement préférée 2 à 6, de manière notamment préférée ≥ 1,
u = 0 à 11, de préférence 1 à 8, de manière davantage préférée 2 à 6, notamment 2 à 4,
v = 0 à 6, de préférence plus de 0 à 4, notamment 0,1 à 2,
à condition que u + v ≥ 1,
M représentent indépendamment les uns des autres un radical polyéther à modification alcoxysilyle, de préférence de 8 à 400 atomes de carbone, M étant de manière particulièrement préférée un radical de formule (Ia), dans laquelle 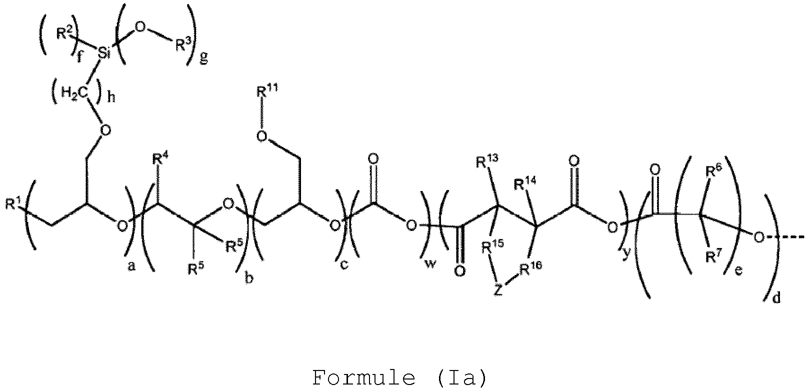 avec
a = 0,1 à 100, de préférence 0,5 à 50, de manière davantage préférée 1 à 10, de manière particulièrement préférée plus de 1 à 5,
b = 2 à 1 000, de préférence 2 à 500, de manière davantage préférée 2 à 400, de manière particulièrement préférée 10 à 100,
c = 0 à 200, de préférence 0 à 100, de manière davantage préférée 0 à 80, de manière particulièrement préférée ≥ 0 à 50,
d = 0 à 200, de préférence 0 à 100, de manière davantage préférée plus de 0 à 80, de manière particulièrement préférée ≥ 0 à 50,
w = 0 à 200, de préférence 0 à 100, de manière davantage préférée 0 à 80, de manière particulièrement préférée ≥ 0 à 50,
y = 0 à 500, de préférence 0 à 300, de manière particulièrement préférée 0 à 200 et de manière notamment préférée ≥ 0 à 100,
e = 1 à 10,
f = 0 à 2,
g = 1 à 3,
à condition que g + f = 3,
h = 0 à 10, de préférence 1 à 6, de manière particulièrement préférée 1, 2 ou 3,
à condition que les groupes munis des indices a, b, c, d, w et y puissent être permutés librement dans la chaîne moléculaire, les groupes munis des indices w et y ne pouvant pas être suivis par eux-mêmes ou respectivement par l'autre groupe, et
à condition que les différentes unités monomères, aussi bien les fragments munis des indices a, b, c, d, w et y que la chaîne polyoxyalkylène éventuellement présente du substituant R1 puissent être configurées en séquences les unes par rapport aux autres, des séquences individuelles pouvant également être présentes à plusieurs reprises et pouvant être réparties statistiquement les unes par rapport aux autres, ou bien étant soumises à une distribution statistique et pouvant en outre être permutées librement les unes avec les autres, au sens d'un agencement dans un ordre quelconque, avec comme limitation que les groupes munis des indices w et y ne peuvent pas être suivis par eux-mêmes ou respectivement par l'autre groupe, et
R¹ = indépendamment les uns des autres, un radical hydrocarboné organique saturé ou insaturé, linéaire ou ramifié, qui peut contenir O, S et/ou N en tant qu'hétéroatomes, le radical hydrocarboné contenant de préférence 1 à 400 atomes de carbone, de préférence 2, 3 ou 4 à 200 atomes de carbone,
R² = indépendamment les uns des autres, un groupe alkyle de 1 à 8 atomes de carbone, notamment méthyle, éthyle, propyle ou isopropyle,
R³ = indépendamment les uns des autres, un groupe alkyle de 1 à 8 atomes de carbone, notamment méthyle, éthyle, propyle ou isopropyle,
R⁴ = indépendamment les uns des autres un radical hydrogène, un groupe alkyle de 1 à 20 atomes de carbone, un groupe aryle ou alkaryle, de préférence hydrogène, méthyle, éthyle, octyle, décyle, dodécyle, phényle, benzyle, de manière particulièrement préférée hydrogène, méthyle ou éthyle,
R⁵ = indépendamment les uns des autres, un radical hydrogène ou un groupe alkyle de 1 à 8 atomes de carbone, de préférence hydrogène, méthyle ou éthyle, de manière particulièrement préférée hydrogène,
ou R⁴ et un des radicaux R⁵ peuvent former ensemble un cycle, qui comprend les atomes auxquels R⁴ et R⁵ sont reliés, ce cycle contenant de préférence 5 à 8 atomes de carbone,
R⁶ et R⁷ = indépendamment les uns des autres, un radical hydrogène, un groupe alkyle de 1 à 20 atomes de carbone, un groupe aryle ou alkaryle et/ou un groupe alcoxy, de préférence un groupe méthyle,
R¹¹ = indépendamment les uns des autres, un radical hydrocarboné saturé ou insaturé, aliphatique ou aromatique, de 2 à 30 atomes C, notamment de jusqu'à 24 atomes C, qui est éventuellement substitué, de préférence un groupe alkyle de 1 à 16 atomes de carbone, de manière particulièrement préférée de 6 à 12 atomes de carbone, dont la chaîne peut être interrompue par un oxygène et peut porter d'autres groupes fonctionnels, tels que p. ex. des groupes carboxyle éventuellement estérifiés avec des alcools, tels que p. ex. le méthanol, l'éthanol, le propanol, le butanol ou l'hexanol, des groupes hydroxy éventuellement estérifiés avec des acides tels que l'acide acétique, l'acide butyrique, l'acide néodécanoïque ou l'acide (méth)acrylique ou les polymères de l'acide (méth)acrylique, ou un groupe aryle de 6 à 20 atomes de carbone, ou un groupe alkaryle de 7 à 30, de préférence 7 à 20 atomes de carbone, de préférence choisi parmi un groupe méthyle, éthyle, propyle, butyle, isobutyle, tert-butyle, 2-pentyle, 3-pentyle, 2-méthylbutyle, 3-méthylbutyle, 2-méthyl-2-butyle, 3-méthyl-2-butyle, 2,2-diméthylpropyle, hexyle, heptyle, octyle, 2-éthylhexyle, 2-propylheptyle, 2-butyloctanyle, 2-méthylundécyle, 2-propylnonyle, 2-éthyldécyle, 2-pentylheptyle, 2-hexyldécyle, 2-butyltétradécyle, 2-dodécylhexadécyle, 2-tétradécyloctadécyle, 3,5,5-triméthylhexyle, isononanyle, isotridécyle, isomyristyle, isostéaryle, 2-octyldodécyle, triphénylméthyle, C(O)-(CH₂)₅-C-(CH₃)₃- (radical de l'acide néodécanoïque), alkyle en C₁₂/C₁₄, phényle, crésyle, tert-butylphényle ou benzyle, de manière particulièrement préférée un groupe 2-éthylhexyle, C(O)-(CH₂)₅-C-(CH₃)₃- (radical de l'acide néodécanoïque), alkyle en C₁₂/C₁₄, phényle, crésyle, tert-butylphényle, de manière tout particulièrement préférée un groupe tert-butylphényle ou 2-éthylhexyle,
R¹³, R¹⁴ = indépendamment les uns des autres l'hydrogène et/ou un radical organique, de préférence des groupes alkyle, alcényle, alkylidène, alcoxy, aryle et/ou aralkyle, ou R¹³ et/ou R¹⁴ peuvent éventuellement également ne pas être présents, lorsque R¹³ et R¹⁴ ne sont pas présents, une double liaison C=C étant présente à la place des radicaux R¹³ et R¹⁴,
le fragment pontant Z peut être présent ou ne pas être présent,
si le fragment pontant Z n'est pas présent,
R¹⁵ et R¹⁶ = indépendamment les uns des autres l'hydrogène et/ou un radical organique, de préférence des groupes alkyle, alcényle, alkylidène, alcoxy, aryle et/ou aralkyle, lorsqu'un des radicaux R¹³ ou R¹⁴ n'est pas présent, le radical géminal respectif (c'est-à-dire R¹⁵ lorsque R¹³ n'est pas présent et R¹⁶ lorsque R¹⁴ n'est pas présent) étant un radical alkylidène, de préférence méthylidène (=CH₂),
si le fragment pontant Z est présent,
R¹⁵ et R¹⁶ = radicaux hydrocarbonés qui sont pontés cycloaliphatiquement ou aromatiquement par le fragment Z, Z représentant un radical alkylène ou alcénylène bivalent, qui peut être davantage substitué,
le fragment muni de l'indice y peut être obtenu par exemple par l'incorporation d'anhydrides cycliques, des anhydrides cycliques préférés étant l'anhydride succinique, l'anhydride de l'acide maléique, l'anhydride itaconique, l'anhydride glutarique, l'anhydride adipique, l'anhydride citraconique, l'anhydride de l'acide phtalique, l'anhydride de l'acide hexahydrophtalique et l'anhydride triméllitique, ainsi que les anhydrides d'acides polyfonctionnels tels que le dianhydride pyroméllitique, le dianhydride de l'acide benzophénone-3,3',4,4'-tétracarboxylique, le dianhydride de l'acide 1,2,3,4-butane-tétracarboxylique ou les homo- ou copolymères polymérisés par voie radicalaire de l'anhydride de l'acide maléique avec de l'éthylène, de l'isobutylène, de l'acrylonitrile, de l'acétate de vinyle ou du styrène, des anhydrides particulièrement préférés étant l'anhydride succinique, l'anhydride de l'acide maléique, l'anhydride itaconique, l'anhydride glutarique, l'anhydride adipique, l'anhydride citraconique, l'anhydride de l'acide phtalique,
l'anhydride de l'acide hexahydrophtalique, et, pour le fragment D :
D est un radical polyéther -(D^{A})ₜ-D^{X} avec t = 2,
D^{X} étant un radical hydrocarboné organique fonctionnel t-valent saturé ou insaturé, linéaire ou ramifié, qui peut contenir en tant qu'hétéroatomes O, S, Si et/ou N, chacun des radicaux D^{A} étant relié par une liaison covalente au radical D^{X},
le radical hydrocarboné contenant de préférence 8 à 1 500 atomes de carbone,
la chaîne carbonée du radical hydrocarboné étant de préférence interrompue par des atomes d'oxygène,
le radical hydrocarboné contenant de préférence des substituants contenant un atome de silicium,
les substituants contenant un atome de silicium étant de préférence des groupes alcoxysilyle,
le radical hydrocarboné interrompu par des atomes d'oxygène étant de préférence un radical polyoxyalkylène, un radical polyéther et/ou un radical polyéther-alcoxy, ou
D^{X} pouvant être un groupe phénolique annelé une ou plusieurs fois,
ou D^{X} pouvant de manière particulièrement préférée être un radical t-valent d'un alcool hydroxylé t-fois, d'un polyéthérol, d'un polyestérol, d'un siloxane, d'un polyéthérol perfluoré ou d'un (poly)-uréthane, de préférence d'un polyéther à fonction OH, d'un polyester, d'un polycarbonate, d'un polyéther-ester ou d'un polyéther perfluoré et leurs copolymères, de manière particulièrement préférée d'un polyéther à fonction OH ou d'un polyester,
et D^{A} étant un fragment de formule (II) 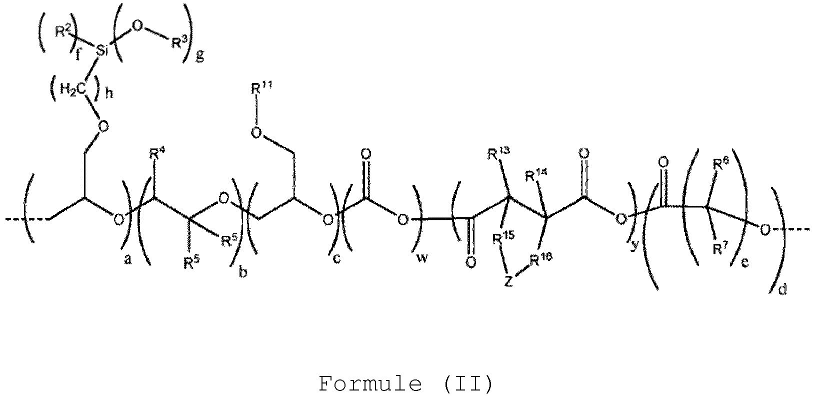
dans laquelle a à h, w et y, R² à R¹⁶ et Z sont indépendamment les uns des autres tels que définis pour la formule (Ia),
à condition que la somme de tous les indices b des formules (Ia) et (II) soit d'au moins 5, de préférence d'au moins 10, de manière particulièrement préférée d'au moins 15, et que la somme de tous les indices a des formules (Ia) et (II) soit supérieure à 2,
UR représentent indépendamment les uns des autres des radicaux bivalents identiques ou différents de la forme -U-D^{C}-U-, U étant un groupe -C(O)-NH- qui est relié à D^{C} par l'azote, et
D^{C} représentent indépendamment les uns des autres un radical hydrocarboné bivalent, substitué ou non substitué, linéaire ou ramifié, saturé ou insaturé, de 1 à 30 atomes de carbone, choisi parmi les radicaux alkyle, alcényle, aryle ou alkaryle, qui peut éventuellement être interrompu par des hétéroatomes tels qu'O, N et/ou S, un groupe aryle ou alkaryle, D^{C} étant de préférence un radical hydrocarboné bivalent de 6 à 30 atomes de carbone, D^{C} étant de manière particulièrement préférée un radical isophorone,
AP représentent indépendamment les uns des autres des radicaux identiques ou différents de formule générale (IIIa) ou (IIIb)

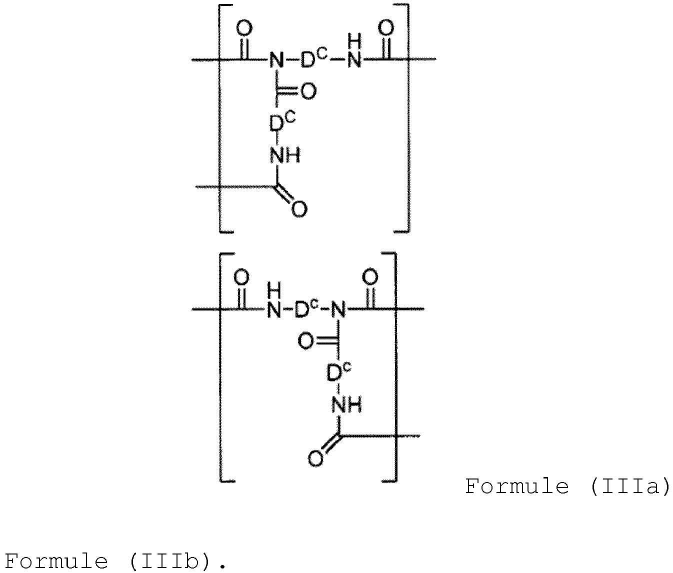

2. Polymères à modification alcoxysilyle selon la revendication 1, **caractérisés en ce que**, dans la formule (I), le rapport entre les indices a des fragments M et D répond à l'équation suivante : a (M) > 2 * a (D).

3. Polymères à modification alcoxysilyle selon la revendication 1 ou 2, **caractérisés en ce que**, dans la formule (I),
i = 1 à 2, de préférence plus de 1 à 2, de manière particulièrement préférée 2,
j = 1 à 6, de préférence 1, 2, 3 ou 4,
u = j + 1,
v = 0,
M correspondant à la formule (Ia) avec
a = 0,1 à 50, de préférence 0,5 à 20, de manière davantage préférée 1 à 4,
b = 10 à 500, de manière davantage préférée 12 à 100,
c = 0 à 20, de préférence 0 à 4,
d = 0 à 20, de préférence 0,
w = 0 à 20, de préférence 0,
y = 0 à 20, de préférence 0,
e = 1 à 10,
f = 0 à 2,
g = 1 à 3,
à condition que g + f = 3,
et h = 1, 2 ou 3, et
et D correspondant à la formule (II) avec
a = 0 à 10, de préférence plus de 0,1 à 5, de manière davantage préférée 0,2 à 2, notamment 0,25 à 1,
b = 10 à 700, de manière davantage préférée 12 à 350,
c = 0 à 20, de préférence 0 à 10,
d = 0 à 20, de préférence 0,
w = 0 à 20, de préférence 0,
y = 0 à 20, de préférence 0,
e = 1 à 10,
f = 0 à 2,
g = 1 à 3,
à condition que g + f = 3,
et h = 1, 2 ou 3,
et les définitions des radicaux non mentionnés explicitement sont telles que définies précédemment dans la revendication 2,
et, pour UR :
UR représentent indépendamment les uns des autres des radicaux bivalents identiques ou différents de la forme -U-D^{C}-U-, D^{C} représentant indépendamment les uns des autres un radical hydrocarboné bivalent, substitué ou non substitué, linéaire ou ramifié, saturé ou insaturé, de 1 à 30 atomes de carbone, D^{C} étant de manière particulièrement préférée un radical isophorone.

4. Procédé de fabrication des polymères à modification alcoxysilyle selon les revendications 1 à 3, comprenant les étapes suivantes :
(1) la mise en réaction d'au moins un démarreur à fonction dihydroxy (A), choisi dans le groupe constitué par les alcools ou les polyéthérols avec au moins un oxyde d'alkylène et au moins un époxyde portant des groupes alcoxysilyle,
(2) la mise en réaction d'au moins un démarreur à fonction monohydroxy (B) choisi dans le groupe constitué par les alcools ou les polyéthérols avec au moins un oxyde d'alkylène et au moins un époxyde portant des groupes alcoxysilyle, et
(3) la mise en réaction des produits des étapes de procédé (1) et (2) avec au moins un diisocyanate et éventuellement d'autres réactifs.

5. Procédé selon la revendication 4, **caractérisé en ce que** l'étape de procédé (3) est réalisée en deux étapes ; lors de la première étape (3a), le produit d'alcoxylation H-D-H de l'étape de procédé (1) étant tout d'abord mis en réaction avec un diisocyanate de telle sorte qu'un intermédiaire à fonction NCO se forme, qui est ensuite lors de la deuxième étape (3b) mis en réaction avec le produit d'alcoxylation à fonction monohydroxy H-M de l'étape de procédé (2) pour former le polymère final.

6. Procédé selon l'une quelconque des revendications 4 et 5, **caractérisé en ce qu'**à l'étape de procédé (3), lors de la deuxième étape (3b), des composés non à modification alcoxysilyle H-M sont également utilisés en plus des produits d'alcoxylation à fonction monohydroxy à modification alcoxysilyle H-M.

7. Procédé selon l'une quelconque des revendications 4 à 6 pour la fabrication de polymères à modification alcoxysilyle selon la formule (I), **caractérisé en ce qu'**aux étapes (1) et (2), au moins un composé de formule générale (V) 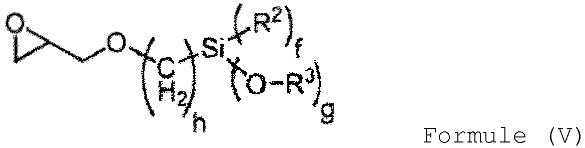 avec f, g, h, R² et R³ selon les formules (Ia) et (II), et au moins un oxyde d'alkylène, de préférence l'oxyde de propylène et éventuellement l'oxyde d'éthylène, sont mis en réaction.

8. Procédé selon l'une quelconque des revendications 4 à 7, **caractérisé en ce que** le démarreur à fonction dihydroxy de l'étape de procédé (1) est choisi parmi les polyéthérols, les polycarbonate-polyols et les polyéther-carbonates, et le démarreur à fonction monohydroxy de l'étape de procédé (2) est de préférence choisi parmi le butanol, l'éthanol ou le polyéthérol.

9. Procédé selon l'une quelconque des revendications 4 à 8, **caractérisé en ce qu'**à l'étape de procédé (3), du diisocyanate d'isophorone est utilisé en tant que diisocyanate.

10. Procédé selon l'une quelconque des revendications 4 à 9 pour la fabrication de polymères à modification alcoxysilyle présentant une résistance à la propagation d'une déchirure améliorée.

11. Composition durcissable, contenant au moins un polymère à modification alcoxysilyle selon les revendications 1 à 3, de préférence fabriqué par un procédé selon l'une quelconque des revendications 4 à 10, et au moins un catalyseur de durcissement.

12. Composition durcissable selon la revendication 11, **caractérisée en ce que** la composition contient en outre un ou plusieurs promoteurs d'adhésion et/ou un ou plusieurs agents siccatifs chimiques pour l'humidité ; le 3-aminopropyltriéthoxysilane, le 3-aminopropyltriméthoxysilane, le N-(2-aminoéthyl)-3-aminopropyltriméthoxysilane ou des amino/alkyl-alcoxysilanes oligomères étant de préférence contenus en tant que promoteur d'adhésion, et le vinyltriéthoxysilane ou le vinyltriméthoxysilane étant de préférence contenu en tant qu'agent siccatif chimique pour l'humidité.

13. Utilisation des compositions selon les revendications 11 et/ou 12 pour des applications d'adhésifs et/ou d'agents d'étanchéité.

14. Utilisation de polymères à modification alcoxysilyle selon les revendications 1 à 3 pour le renforcement, le nivellement, la modification, le collage, l'étanchéification et/ou le revêtement de substrats.

15. Utilisation de polymères à modification alcoxysilyle selon les revendications 1 à 3, notamment selon la revendication 2, dans des compositions durcissables, de préférence selon la revendication 11 ou 12, pour l'amélioration de la résistance à la propagation d'une déchirure.
